(19) Europäisches Patentamt / European Patent Office / Office européen des brevets

(11) **EP 4 188 595 B1**

(12) **FASCICULE DE BREVET EUROPEEN**

(45) Date de publication et mention de la délivrance du brevet:
**06.11.2024 Bulletin 2024/45**

(21) Numéro de dépôt: **21746049.2**

(22) Date de dépôt: **21.07.2021**

(51) Classification Internationale des Brevets (IPC):
**B01J 23/72** (2006.01)      **B01J 21/04** (2006.01)
**B01J 21/10** (2006.01)      **B01J 23/00** (2006.01)
**B01J 35/00** (2024.01)      **B01J 37/00** (2006.01)
**B01J 37/02** (2006.01)      **B01J 37/08** (2006.01)

(52) Classification Coopérative des Brevets (CPC):
**B01J 21/10; B01J 21/04; B01J 23/005;
B01J 23/72; B01J 35/30; B01J 35/40;
B01J 35/615; B01J 35/635; B01J 35/69;
B01J 37/0045; B01J 37/0201; B01J 37/08;
B01J 37/088;** B01J 23/78; Y02E 20/34

(86) Numéro de dépôt international:
**PCT/EP2021/070364**

(87) Numéro de publication internationale:
**WO 2022/023140 (03.02.2022 Gazette 2022/05)**

(54) **SOLIDE PORTEUR D'OXYGENE A SPINELLE SOUS-STOECHIMETRIQUE POUR UN PROCEDE D'OXYDO-REDUCTION EN BOUCLE CHIMIQUE**

SAUERSTOFFTRÄGERFESTSTOFF MIT SUBSTÖCHIOMETRISCHEM SPINELL FÜR EIN REDOX-VERFAHREN MIT CHEMISCHER SCHLEIFE

OXYGEN-CARRIER SOLID WITH SUB-STOICHIOMETRIC SPINEL FOR A CHEMICAL-LOOPING REDOX PROCESS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.07.2020 FR 2008189**

(43) Date de publication de la demande:
**07.06.2023 Bulletin 2023/23**

(73) Titulaires:
• **IFP Energies nouvelles**
  **92500 Rueil-Malmaison (FR)**
• **TotalEnergies OneTech**
  **92400 Courbevoie (FR)**

(72) Inventeurs:
• **LAMBERT, Arnold**
  **92852 RUEIL-MALMAISON CEDEX (FR)**
• **MICHAU, Mathieu**
  **92852 RUEIL-MALMAISON CEDEX (FR)**

(74) Mandataire: **IFP Energies nouvelles
Département Propriété Industrielle
Rond Point de l'échangeur de Solaize
BP3
69360 Solaize (FR)**

(56) Documents cités:
**US-A1- 2019 388 874**

• GAYÁN PILAR ET AL: "Effect of Support on the Behavior of Cu-Based Oxygen Carriers during Long-Term CLC Operation at Temperatures above 1073 K", vol. 25, no. 3, 17 March 2011 (2011-03-17), WASHINGTON, DC, US., pages 1316 - 1326, XP055785722, ISSN: 0887-0624, Retrieved from the Internet <URL:https://pubs.acs.org/doi/pdf/10.1021/ef101583w> DOI: 10.1021/ef101583w

• **ARJMAND MEHDI ET AL: "Oxygen Release and Oxidation Rates of MgAl 2 O 4 -Supported CuO Oxygen Carrier for Chemical-Looping Combustion with Oxygen Uncoupling (CLOU)", vol. 26, no. 11, 18 October 2012 (2012-10-18), WASHINGTON, DC, US., pages 6528 - 6539, XP055785777, ISSN: 0887-0624, Retrieved from the Internet <URL:https://pubs.acs.org/doi/pdf/10.1021/ef30 10064> DOI: 10.1021/ef3010064**

## Description

### Domaine technique

La présente invention concerne un solide porteur d'oxygène, sa préparation et son utilisation dans un procédé d'oxydo-réduction en boucle chimique. En particulier, le nouveau type de solide porteur d'oxygène selon l'invention peut être utilisé dans un procédé de combustion en boucle chimique, communément appelé « Chemical Looping Combustion» (CLC) selon la terminologie anglo-saxonne.

### Technique antérieure

Les procédés d'oxydo-réduction en boucle chimique mettant en oeuvre un solide porteur d'oxygène sont connus dans le domaine de la production d'énergie, des turbines à gaz, des chaudières et des fours, notamment pour l'industrie pétrolière, verrière et cimentière.

En particulier, la production d'électricité, de chaleur, d'hydrogène ou de vapeur peuvent être réalisées par ce type de procédés, typiquement un procédé CLC, mettant en oeuvre des réactions d'oxydo-réduction d'un solide porteur d'oxygène, classiquement un oxyde métallique supporté sur une céramique, pour produire un gaz chaud à partir d'un combustible, par exemple le gaz naturel, le monoxyde de Carbone CO, l'hydrogène $H_2$, les charbons, les résidus pétroliers ou un mélange d'hydrocarbures, et isoler le dioxyde de carbone $CO_2$ produit. Il est alors envisageable de stocker le $CO_2$ capté dans des formations géologiques, ou de l'utiliser comme réactif dans d'autres procédés, ou encore de l'injecter dans les puits de pétrole afin d'accroître la quantité d'hydrocarbures extraite des gisements (récupération assistée du pétrole EOR et du gaz EGR, pour « Enhanced Oil Recovery » et « Enhanced Gas Recovery » en anglais).

Dans un tel procédé d'oxydo-réduction en boucle chimique, une première réaction d'oxydation du solide porteur d'oxygène avec de l'air ou un autre gaz oxydant, jouant le rôle de comburant, permet, du fait du caractère exothermique de l'oxydation, d'obtenir un gaz chaud dont l'énergie peut ensuite être exploitée. Lorsque le gaz oxydant est la vapeur d'eau, l'oxydation du solide porteur d'oxygène permet également de produire un effluent gazeux riche en $H_2$.

Une seconde réaction de réduction du solide porteur d'oxygène oxydé à l'aide d'un gaz, d'un liquide ou d'un solide réducteur (charge hydrocarbonée) permet ensuite d'obtenir un solide porteur d'oxygène réutilisable ainsi qu'un mélange gazeux comprenant essentiellement du $CO_2$ et de l'eau, voire du gaz de synthèse contenant du CO et de l'$H_2$, selon les conditions opérées lors de l'étape de réduction.

Dans un procédé CLC, l'énergie peut être produite sous la forme de vapeur ou d'électricité par exemple. La chaleur de combustion de la charge hydrocarbonée est similaire à celle rencontrée dans la combustion classique. Celle-ci correspond à la somme des chaleurs de réduction et d'oxydation dans la boucle chimique. La chaleur est généralement extraite par des échangeurs situés à l'intérieur, en paroi ou en appendice des réacteurs fuel et/ou air, sur les lignes de fumées, ou sur les lignes de transfert du solide porteur d'oxygène.

Un intérêt majeur de ces procédés CLC est de permettre d'isoler facilement le $CO_2$ (ou le gaz de synthèse) contenu dans le mélange gazeux dépourvu d'oxygène et d'azote constituant l'effluent issu du réacteur de réduction. Un autre avantage peut être la production d'un flux d'azote $N_2$ (et d'argon) ne contenant pratiquement plus d'oxygène, et correspondant à l'effluent issu du réacteur d'oxydation, lorsque l'air est utilisé comme gaz oxydant.

Dans un contexte d'une demande énergétique mondiale croissante, le procédé CLC fournit donc une solution attractive de captage du $CO_2$ en vue de sa séquestration ou de sa valorisation pour d'autres procédés, afin de limiter l'émission de gaz à effet de serre préjudiciable à l'environnement.

Le brevet US5447024 décrit par exemple un procédé CLC comprenant un premier réacteur de réduction d'un solide porteur d'oxygène à l'aide d'un gaz réducteur et un second réacteur d'oxydation permettant de restaurer le solide porteur d'oxygène dans son état oxydé par une réaction d'oxydation avec de l'air humide. La technologie du lit fluidisé circulant est utilisée pour permettre le passage continu du solide porteur d'oxygène du réacteur de réduction au réacteur d'oxydation et inversement.

La demande de brevet WO2006/123925 décrit une autre mise en oeuvre du procédé CLC utilisant un ou plusieurs réacteurs à lit fixe contenant le solide porteur d'oxygène, les cycles redox étant réalisés par permutation des gaz afin de réaliser successivement les réactions d'oxydation et de réduction du solide porteur d'oxygène.

Dans le procédé CLC, le solide porteur d'oxygène, passant alternativement de sa forme oxydée à sa forme réduite et inversement, décrit un cycle d'oxydo-réduction. Le solide porteur d'oxygène a donc un rôle de transporteur d'oxygène: il comporte le ou les oxydes métalliques susceptibles d'échanger de l'oxygène dans les conditions redox du procédé CLC. GAYÁN PILAR ET AL (ENERGY & FUELS, vol. 25, no. 3, 17 mars 2011, pages 1316-1326) décrit un solide porteur d'oxygène sous forme de particules pour un procédé d'oxydo-réduction en boucle chimique comportant: i) du cuivre à une teneur totale X de 12% exprimée en poids d'oxyde de cuivre par rapport au poids total du solide porteur d'oxygène sous sa forme oxydée; ii) une matrice en céramique au sein de laquelle est dispersé ledit cuivre, ladite matrice en céramique ayant une quantité de MgO en pourcentage poids du solide porteur d'oxygène, de 27%.

Il convient de noter que, de manière générale, les termes oxydation et réduction sont utilisés en relation avec l'état respectivement oxydé ou réduit du solide porteur d'oxygène. Le réacteur d'oxydation est celui dans lequel le solide porteur d'oxygène est oxydé et le réacteur de réduction est le réacteur dans lequel il est réduit.

Ainsi, dans le réacteur de réduction, le solide porteur d'oxygène, un oxyde métallique ($M_xO_y$), généralement supporté sur une céramique, M représentant un métal, est tout d'abord réduit à l'état $M_xO_{y-2n-m/2}$, par l'intermédiaire d'un hydrocarbure $C_nH_m$, qui est corrélativement oxydé en $CO_2$ et $H_2O$, selon la réaction (1), ou éventuellement en mélange $CO + H_2$ selon la nature du solide porteur d'oxygène et les proportions utilisées.

$$C_nH_m + M_xO_y \rightarrow n\ CO_2 + m/2\ H_2O + M_xO_{y-2n-m/2} \qquad (1)$$

Dans le réacteur d'oxydation, le solide porteur d'oxygène est restauré à son état oxydé ($M_xO_y$) au contact d'un gaz oxydant, typiquement de l'air, selon la réaction (2), avant de retourner vers le premier réacteur.

$$M_xO_{y-2n-m/2} + (n+m/4)\ O_2 \rightarrow M_xO_y \qquad (2)$$

Dans le cas où l'oxydation du solide porteur d'oxygène est réalisée par la vapeur d'eau, un flux d'hydrogène est obtenu en sortie du réacteur d'oxydation (réaction (3)).

$$M_xO_{y-2n-m/2} + (2n+m/2)\ H_2O \rightarrow M_xO_y + (2n+m/2)\ H_2 \qquad (3)$$

L'oxyde métallique est en général associé à un liant ou un support, notamment pour assurer une bonne réversibilité des réactions d'oxydation et de réduction, et améliorer la résistance mécanique des particules. En effet, les oxydes métalliques, choisis par exemple parmi les couples redox du cuivre, du nickel, du fer, du manganèse et/ou du cobalt, ne peuvent pas être utilisés purs car les cycles d'oxydation/réduction successifs à haute température entraînent une diminution importante et rapide de la capacité de transfert d'oxygène, due au frittage des particules métalliques.

Ainsi, dans le brevet US5447024, le solide porteur d'oxygène comporte un couple oxydo-réducteur NiO/Ni associé à un liant YSZ qui est de la zircone stabilisée par de l'yttrium, également appelée zircone yttriée. De nombreux types de liants et supports ont été étudiés dans la littérature, afin d'augmenter la résistance mécanique des particules, à un coût moins élevé que l'YSZ. Parmi ceux-ci, on peut citer l'alumine, les spinelles d'aluminate métallique, le dioxyde de titane, la silice, la zircone, la cérine, le kaolin, la bentonite, etc.

L'efficacité du procédé CLC dépend principalement des propriétés physico-chimiques du solide porteur d'oxygène. En effet, outre la réactivité et la capacité de transfert d'oxygène du solide porteur d'oxygène, qui influent sur le dimensionnement des réacteurs et, dans le cas de la technologie en lit fluidisé circulant, sur les taux de circulation des particules, la durée de vie des particules dans le procédé a un impact prépondérant sur le coût d'exploitation du procédé, particulièrement dans le cas du procédé en lit fluidisé circulant.

En effet, dans le cas du procédé en lit fluidisé circulant, le taux d'attrition des particules impose de compenser la perte de solide porteur d'oxygène sous forme de fines, typiquement des particules du solide porteur d'oxygène de diamètre inférieur à 40 $\mu$m, par du solide porteur d'oxygène neuf. Le taux de renouvellement du solide porteur d'oxygène dépend donc fortement de la résistance mécanique des particules ainsi que de leur stabilité chimique dans les conditions du procédé, qui inclut de nombreux cycles d'oxydation/réduction successifs.

D'une manière générale, les performances des solides porteurs d'oxygène rapportées dans la littérature sont satisfaisantes en termes de capacité de transfert d'oxygène et de réactivité avec les différents hydrocarbures testés (cf. Adanez et al. 2012 : "Progress in Chemical Looping Combustion and Reforming technologies", Progress in Energy and Combustion Science, 38(2), 2012, p.215-282).

Toutefois, dans la plupart des publications, une durée de test trop courte et/ou l'absence de caractérisation approfondie des particules après test ne permettent pas de conclure quant à la durée de vie des particules dans le procédé CLC, bien que certains auteurs annoncent des durées de vie importantes.

Ainsi, bien que de nombreuses études portant sur un oxyde métallique (généralement CuO, NiO, CoO, $Fe_2O_3$ et/ou $MnO_2$) sur un support concluent à l'adéquation de la plupart des formulations testées au procédé CLC, la durée de vie des particules liée aux nombreux cycles redox subis par les particules dans le procédé CLC reste problématique. Des phénomènes de migration des oxydes métalliques vers la surface des particules et de modification de texture du support ont été observés, qui nuisent à la performance et à la durée de vie des particules du porteur d'oxygène.

P. Knutsson et C. Linderholm , 2015 ("Characterization of Ilmenite used as Oxygen Carrier in a 100 kW Chemical-Looping Combustor for Solid fuels", Applied Energy 157, 2015, p.368-373) ont par exemple montré le développement d'une forte porosité des particules d'ilménite (minerai $FeTiO_3$) vieillies, aboutissant à leur désintégration sous forme de fines. L'augmentation de porosité observée est concomitante de la migration des ions ferreux et/ou ferriques par diffusion au sein des particules. Selon les auteurs, une ségrégation du fer au sein des particules précède sa migration vers la surface, créant la porosité qui aboutit à la désagrégation des particules sous forme de fines. La durée de vie estimée des particules d'ilménite est de l'ordre de 200 heures seulement (cf. Abanades et al. 2015 : « Emerging CO2 Capture systems », Int. J. Greenhouse Gas Control 40, 2015, p. 126-166).

Le phénomène d'attrition du solide porteur d'oxygène est ainsi principalement dû à une évolution morphologique liée aux cycles redox consécutifs subis par les particules, plus qu'aux chocs sur les parois et entre particules, habituellement considérés comme source d'attrition principale dans les procédés en lit fluidisé.

Wei et al. 2015 ("Continuous Operation of a 10 kWth Chemical Looping Integrated Fluidized Bed Reactor for Gasifying Biomass Using an Iron-Based Oxygen Carrier". Energy Fuels 29, 2015, p.233-241) mentionnent également la conversion de particules synthétiques de $Fe_2O_3/Al_2O_3$ (70/30) en petits grains (i.e. pulvérisation des particules en fines) après seulement 60h de combustion en lit fluidisé circulant.

Ainsi, certaines études rapportent d'une part une perte d'oxydes métalliques au cours des cycles redox, probablement imputable à la migration des oxydes métalliques vers l'extérieur des particules, ensuite éliminés dans les fines par attrition des particules, comme c'est le cas par exemple pour l'oxyde de cuivre, et d'autre part une modification du support des particules au cours des cycles redox, en particulier de particules de $CuO/Al_2O_3$ dont la matrice aluminique se fissure et peut changer de structure cristallographique, aboutissant à la formation de particules fines, ainsi qu'illustré par Forero et al. 2011 (« High température behaviour of a $CuO/\gamma$-Al2O3 oxygen Carrier for chemical-looping combustion », Int. J. Greenhouse Gas Control, 5, 2011, p. 659-667), ou par Lambert et al. 2018 ( « Performance and dégradation mechanisms of CLC particles produced by industrial methods ", Fuel 216, 2018, p.71).

Adanez-Rubio et al. 2013 (« Investigations of combined supports for Cu-based oxygen Carriers for chemical-looping with oxygen uncoupling », Energy Fuels, 2013, 27, p. 3918) rapportent par exemple que la densité remplie tassée de lots de particules à base de CuO imprégné sur différents supports ($TiO_2$, $SiO_2$, $MgAl_2O_4$) diminue de manière notable, ce qui peut être attribué à une augmentation significative de la porosité des particules et signifie que la durée de vie de ces particules est limitée.

La migration du métal avec le nombre de cycles est également rencontrée avec les particules $Fe_2O_3/Al_2O_3$, tel que rapporté par L.S. Fan et al. 2011("Ionic diffusion in the oxidation of iron - effect of support and its implications to chemical looping applications", Energy Environ. Sci., 4, 2011, p. 876), ou avec des particules à base de nickel ($NiO/NiAl_2O_4$), comme montré par Jerndal et al. 2010 ("Investigation of NiO/NiAl2O4 oxygen Carriers for chemiCal-looping combustion produced by spray-drying", International Journal of Greenhouse Gas Control, 4, 2010, p.23). Pour les particules $NiO/NiAl_2O_4$, la présence de nickel métallique à la surface des particules, due à la migration du nickel vers l'extérieur, est probablement à l'origine de la formation des agglomérats observés par Linderholm et al. en 2009 (« Long-term integrity testing of spray-dried particles in a 10-kW chemical-looping combustor using natural gas as fuel", Fuel, 88(11), 2009, p.2083-2096) représentant un risque important d'arrêt accidentel du procédé CLC.

La demande de brevet WO2012/155059 divulgue l'utilisation de solides porteurs d'oxygène constitués d'une masse active (20 à 70% poids), i.e. des oxydes métalliques, d'un matériau support primaire de type céramique ou argile (5 à 70% poids), et d'un matériau support secondaire (1 à 35% poids), également de type céramique ou argile. Le matériau support primaire permettrait de disperser la masse active métallique et empêcherait son agglomération, préservant l'activité redox, tandis que le matériau support secondaire servirait à réduire la vitesse d'expansion volumique responsable de la fragilisation des particules, en formant une phase solide stabilisante qui empêcherait la migration du fer vers la surface. Le brevet FR2937030 enseigne que les spinelles stoechiométriques de formule générale AxA'x'ByB'y'O4 peuvent être utilisés comme solides porteurs d'oxygène dans le procédés d'oxydo-réduction en boucle chimique. L'évolution morphologique de ces spinelles au cours des cycles redox n'a néanmoins pas été étudiée.

Le brevet FR3061036 enseigne que l'utilisation d'un solide porteur d'oxygène dont le volume macroporeux constitue au moins 10% d'un volume poreux total compris entre 0,05 ml/g et 1,2ml/g permet de minimiser la mobilité de l'oxyde de cuivre au sein des particules $CuO/Al_2O_3$ au cours des cycles redox en lit fluidisé. Après de nombreux cycles, la distribution du cuivre est relativement homogène, mais une forte proportion du cuivre forme des nodules cuivreux (CuO) au sein des particules.

La recherche d'un solide porteur d'oxygène performant, en termes de capacité de transfert d'oxygène, de réactivité avec les différentes charges hydrocarbonées susceptibles d'être traitées, et de résistance mécanique, reste donc un objectif primordial pour le développement des procédés d'oxydo-réduction en boucle chimique, tel que le CLC.

## Objectifs et Résumé de l'invention

La présente invention vise à surmonter les problèmes de l'art antérieur exposés ci-dessus, et vise de manière générale à fournir un solide porteur d'oxygène pour un procédé d'oxydo-réduction en boucle chimique qui présente une durée de vie importante lors de son utilisation dans le procédé, pour notamment diminuer les coûts d'investissement et/ou d'opération pour de tels procédés.

Ainsi, pour atteindre au moins l'un des objectifs susvisés, parmi d'autres, la présente invention propose, selon un premier aspect, un porteur d'oxygène sous forme de particules pour un procédé d'oxydo-réduction en boucle chimique tel que la combustion en boucle chimique, comportant :

- du cuivre à une teneur totale X comprise entre 5% et 39% exprimée en poids d'oxyde de cuivre par rapport au poids total du solide porteur d'oxygène sous sa forme oxydée ;

- une matrice en céramique au sein de laquelle est dispersé ledit cuivre, ladite matrice en céramique comportant :

-- un premier spinelle sous-stoechiométrique de formule $Mg_aAl_bO_4$, et/ou

-- un deuxième spinelle sous-stoechiométrique de formule $Cu_cMg_dAl_eO_4$,

avec les indices a, b, c, d, e répondant aux formules décrites plus loin et dans lesquelles $M_{MgO}$, $M_{CuO}$, $M_{Al2O3}$ sont les masses molaires respectives de MgO, CuO et $Al_2O_3$, Y est la quantité de MgO en pourcentage poids du solide porteur d'oxygène, avec X compris entre 5% et 39%, Y compris entre 1% et 23%, et Y < - 0,6342X + 26,22.

Selon un ou plusieurs mode de réalisation de l'invention, la matrice comprend le premier spinelle ou le deuxième spinelle.

Selon un ou plusieurs mode de réalisation de l'invention, la matrice est sensiblement constituée par deuxième spinelle.

Selon un ou plusieurs mode de réalisation de l'invention, les particules ont une forme sensiblement sphérique, et une granulométrie telle que plus de 90% des particules ont une taille comprise entre 50 $\mu$m et 600 $\mu$m, de préférence comprise entre 80 $\mu$m et 400 $\mu$m, et plus préférentiellement comprise entre 100 $\mu$m et 300 $\mu$m.

Selon un ou plusieurs mode de réalisation de l'invention, le solide comporte en outre :

- un volume poreux total du solide porteur d'oxygène Vtot, mesuré par porosimétrie au mercure, compris entre 0,05 et 1,2 ml/g ;

- un volume poreux des macropores constituant au moins 10% de Vtot ;

- une taille des macropores au sein du solide porteur d'oxygène, mesurée par porosimétrie au mercure, supérieure à 50 nm et inférieure ou égale à 7 $\mu$m.

Selon un deuxième aspect, l'invention porte un procédé de préparation d'un tel solide porteur d'oxygène, comportant les étapes suivantes :

**(A)** la préparation d'une suspension aqueuse comportant des particules d'alumines et un liant aluminique, ledit liant aluminique étant de préférence de la boehmite et/ou des hydroxydes d'aluminium, lesdites particules d'alumine formant des grains de taille comprise entre 0,1 $\mu$m et 20 $\mu$m;

**(B)** le séchage par atomisation de la suspension obtenue à l'étape (A) pour former des particules, ledit séchage par atomisation comportant la pulvérisation de la suspension dans une chambre de séchage à l'aide de moyens de pulvérisation pour former des gouttelettes, et la mise en contact simultanée desdites gouttelettes avec un gaz vecteur chaud, de préférence de l'air ou de l'azote, porté à une température comprise entre 180°C et 350°C ;

**(C)** la calcination des particules issues du séchage par atomisation à l'étape (B), ladite calcination étant effectuée sous air et à une température comprise entre 400°C et 1400°C ;

**(D)** le criblage optionnel des particules calcinées issues de l'étape (C), de préférence par séparation au moyen d'un cyclone ;

**(E)** l'intégration de Cu et de Mg selon l'enchainement des étapes (e1) et (e2), ou selon l'étape (e3), ou selon les étapes (e3) et (e2) pour produire le solide porteur d'oxygène sous forme de particules :

**(e1)** (i) l'imprégnation des particules calcinées issues de l'étape (C) ou optionnellement criblées issues de l'étape (D), par une solution aqueuse ou organique contenant au moins un composé précurseur soluble du Mg, puis (ii) le séchage desdites particules imprégnées issues de (i) à une température comprise entre 30°C et 200°C suivi (iii) d'une calcination à une température comprise entre 700°C et 1400°C de préférence sous air ;

**(e2)** (j) l'imprégnation des particules calcinées issues de l'étape (e1) ou des particules calcinées issues de l'étape (C) ou optionnellement des particules criblées issues de l'étape (D), par une solution aqueuse ou organique contenant au moins un composé précurseur soluble du Cu, puis (jj) le séchage desdites particules imprégnées issues de (j) à une température comprise entre 30°C et 200°C suivi (jjj) d'une calcination à une température comprise entre 700°C et 1400°C de préférence sous air ;

(e3) l'incorporation d'un précurseur de Mg et éventuellement d'un précurseur de Cu avant l'étape (B) selon l'une des sous étapes (k), (kk) ou (kkk) suivantes :

(k) avant l'étape (A), l'imprégnation des particules d'alumine utilisées pour préparer la suspension à l'étape (A) par une solution aqueuse ou organique contenant au moins un composé précurseur de Mg, et éventuellement un composé précurseur de Cu, optionnellement suivie du séchage des particules d'alumine imprégnées à une température comprise entre 30°C et 200°C et d'une calcination à une température comprise entre 700°C et 1400°C, de préférence sous air, des particules d'alumine séchées ;

(kk) après l'étape (A) et avant l'étape (B), l'addition d'au moins un précurseur soluble du Mg, et éventuellement d'un précurseur soluble du Cu, à la suspension issue de l'étape (A) ;

(kkk) après l'étape (A) et avant l'étape (B), l'addition à la suspension issue de l'étape (A) d'au moins un oxyde de Mg, et éventuellement d'un oxyde de Cu, le ou lesdits oxydes étant sous la forme de grains de taille comprise entre 0,1 $\mu$m et 20 $\mu$m;

étant entendu que l'étape (e2) est nécessairement réalisée en combinaison avec l'étape (e3) si aucun composé précurseur de Cu ou composé précurseur soluble du Cu ou oxyde de Cu n'est ajouté lors des sous-étapes (k), (kk) et (kkk) à l'étape (e3).

Selon une ou plusieurs mises en oeuvre de l'invention, la calcination à l'étape (C) et/ou à l'étape (e1)(iii) et/ou à l'étape (e2)(jjj) et/ou à l'étape (e3)(k) est effectuée pendant une durée de 1 à 24 heures, et de préférence la calcination à l'étape (C) est effectuée pendant une durée de 3 à 6 heures ou pendant une durée de 5 à 15 heures, la calcination à l'étape (e1)(iii) et/ou à l'étape (e3)(k) est effectuée pendant une durée de 3 à 6 heures, et la calcination à l'étape (e2)(jjj) est effectuée pendant une durée de 5 à 15 heures. Selon une ou plusieurs mises en oeuvre de l'invention, la calcination à l'étape (C) et/ou à l'étape (e1)(iii) et/ou à l'étape (e2)(jjj) et/ou à l'étape (e3)(k) est effectuée selon une rampe de montée en température comprise entre 1°C/min et 50°C/min, et de préférence entre 5°C/min et 20°C/min, pour atteindre la température de calcination donnée.

Selon une ou plusieurs mises en oeuvre de l'invention, la calcination à l'étape (C) est effectuée sous air à une température comprise entre 800°C et 950°C, et plus préférentiellement entre 900°C et 950°C, la calcination à l'étape (e1)(iii) et/ou à l'étape (e3)(k) est effectuée sous air à une température comprise entre 750°C et 950°C, et la calcination à l'étape (e2)(jjj) est effectuée sous air à une température comprise entre 900°C et 950°C.

Selon une ou plusieurs mises en oeuvre de l'invention, l'imprégnation à l'étape (e1)(i) et/ou à l'étape (e3)(k) est réalisée à sec avec une solution aqueuse comportant du nitrate de magnésium.

Selon une ou plusieurs mises en oeuvre de l'invention, l'imprégnation à l'étape (e2)(j) est réalisé avec une solution aqueuse comportant du nitrate de cuivre.

Selon une ou plusieurs mises en oeuvre de l'invention, à l'étape (e3)(kk) on ajoute à la suspension issue de l'étape (A) du nitrate de magnésium en tant que précurseur soluble de Mg, et éventuellement du nitrate de cuivre en tant que précurseur soluble de Cu.

Selon une ou plusieurs mises en oeuvre de l'invention, l'imprégnation dans au moins une des étapes (e1)(i) ou ( e2)(j) est réalisée en plusieurs étapes successives, et une calcination intermédiaire entre deux étapes d'imprégnation successives est de préférence réalisée, à une température comprise entre 400°C et 600°C. Selon une ou plusieurs mises en oeuvre de l'invention, les quantités de précurseurs de magnésium et de cuivre sont calculées afin que Y soit comprise entre 1% et 23% et X soit comprise entre 5% et 39%, avec Y < -0,6342X + 26,223, de manière à former le premier spinelle sous-stoechiométrique et/ou le deuxième spinelle sous-stoechiométrique.

Selon une ou plusieurs mises en oeuvre de l'invention, l'intégration de Cu et de Mg est effectuée selon l'étape (e3), et de préférence selon la sous-étape (kk) ou (kkk), et dans lequel la calcination à l'étape (C) est effectuée sous air à une température comprise entre 800°C et 950°C, et plus préférentiellement entre 900°C et 950°C, et pendant une durée de 1 à 24 heures, de préférence de 5 heures à 15 heures.

Selon un troisième aspect, l'invention porte un procédé de combustion d'une charge hydrocarbonée par oxydo-réduction en boucle chimique utilisant un tel solide porteur d'oxygène ou préparé selon le procédé de préparation selon l'invention.

Selon une ou plusieurs mises en oeuvre de l'invention, le solide porteur d'oxygène circule entre au moins une zone de réduction et une zone d'oxydation opérant toutes les deux en lit fluidisé, la température dans la zone de réduction et dans la zone d'oxydation étant comprise entre 600°C et 1200°C, et de préférence comprise entre 600°C et 1100°C, et plus préférentiellement entre 800°C et 1100°C.

D'autres objets et avantages de l'invention apparaîtront à la lecture de la description qui suit d'exemples de réalisations particuliers de l'invention, donnés à titre d'exemples non limitatifs, la description étant faite en référence aux figures annexées décrites ci-après.

**Liste des figures**

La FIG.1 est un diagramme représentant les quantités de CuO et de MgO du porteur d'oxygène selon l'invention.

Les figures 2A, 2B, 2C, 2D et 2E concernent un solide porteur d'oxygène selon l'exemple 2 (exemple non conforme à l'invention).

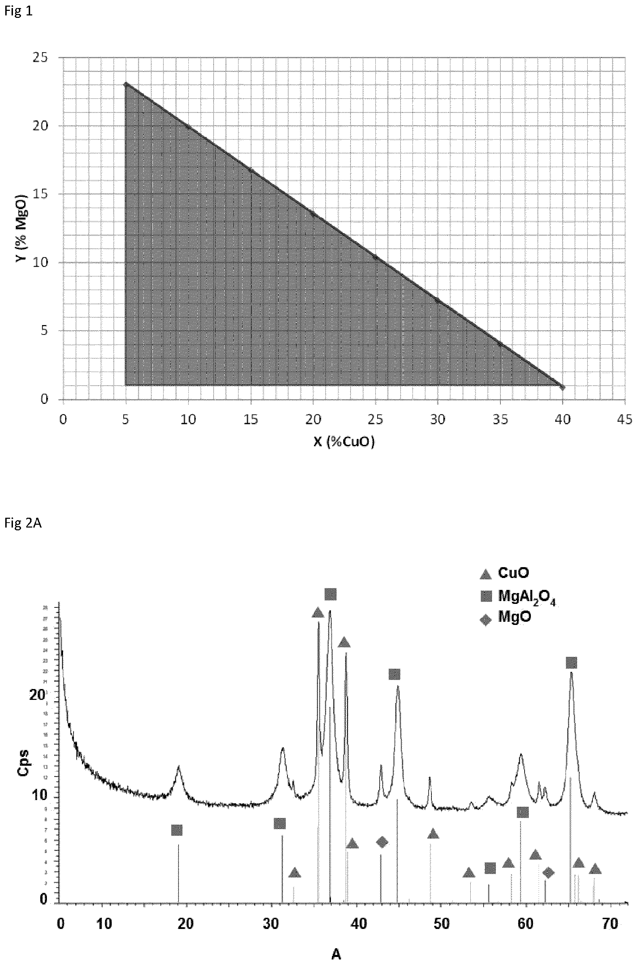

La FIG.2A est un diffractogramme obtenu par diffraction des rayons X (DRX) du solide porteur d'oxygène calciné à 800°C avant test de vieillissement simulant son utilisation dans un procédé CLC.

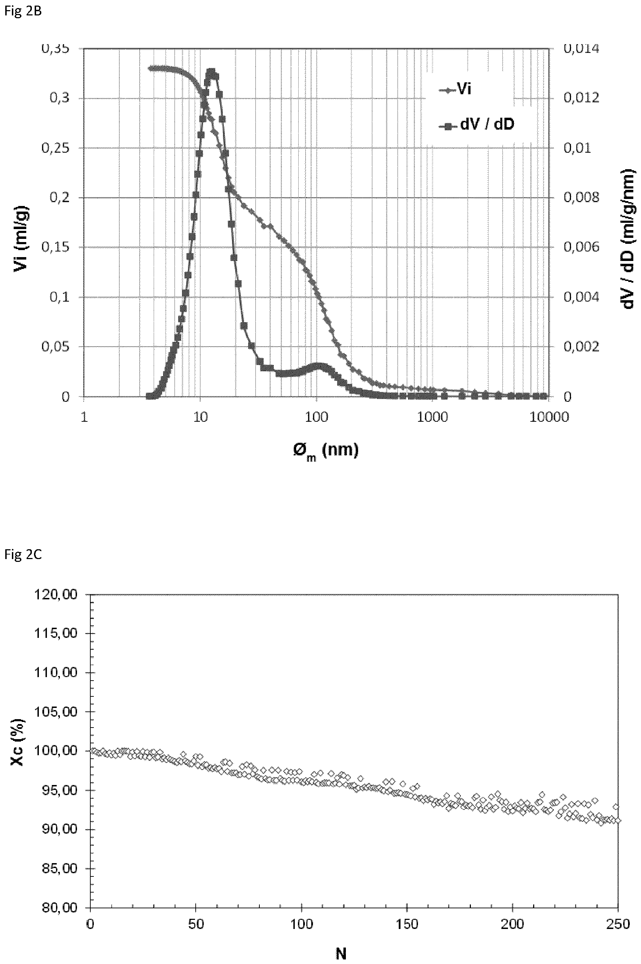

La FIG.2B est un diagramme représentant la distribution en taille des pores du solide porteur d'oxygène avant son utilisation dans un procédé CLC.

La FIG.2C est un diagramme représentant la conversion du méthane en fonction des cycles d'oxydo-réduction dans un procédé CLC utilisant le solide porteur d'oxygène.

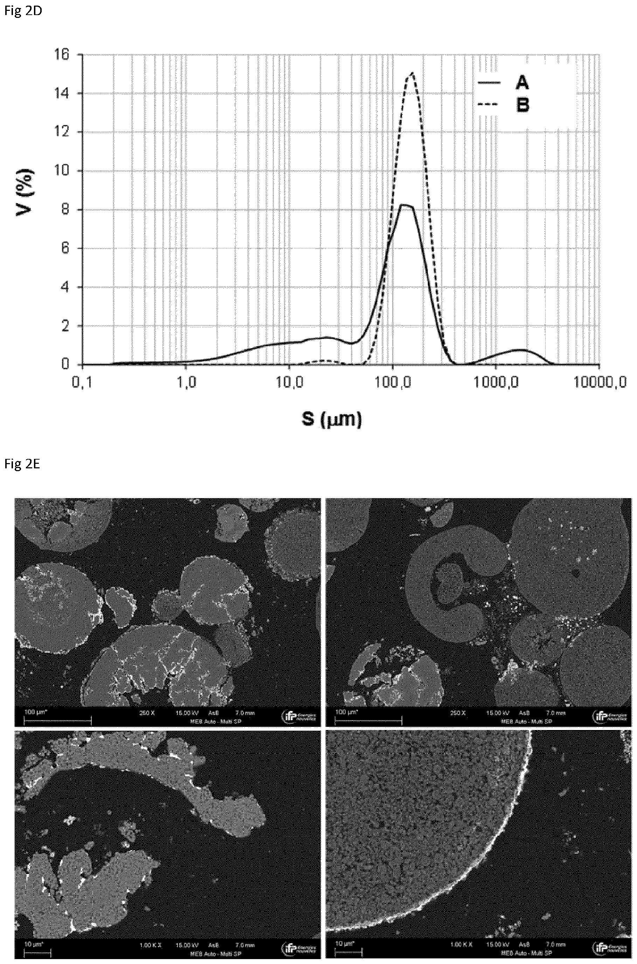

La FIG.2D est un diagramme représentant la distribution de la taille des particules du solide porteur d'oxygène avant (A) et après (B) test de vieillissement simulant son utilisation dans un procédé CLC.

La FIG.2E est un ensemble de clichés MEB d'une section polie d'un échantillon du solide porteur d'oxygène après tests de vieillissement simulant son utilisation dans un procédé CLC.

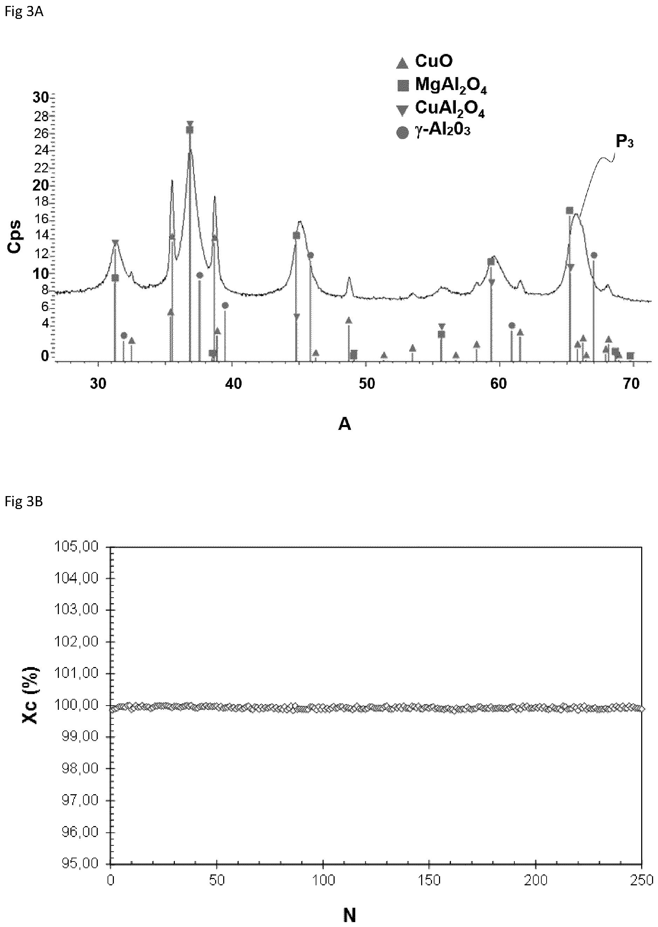

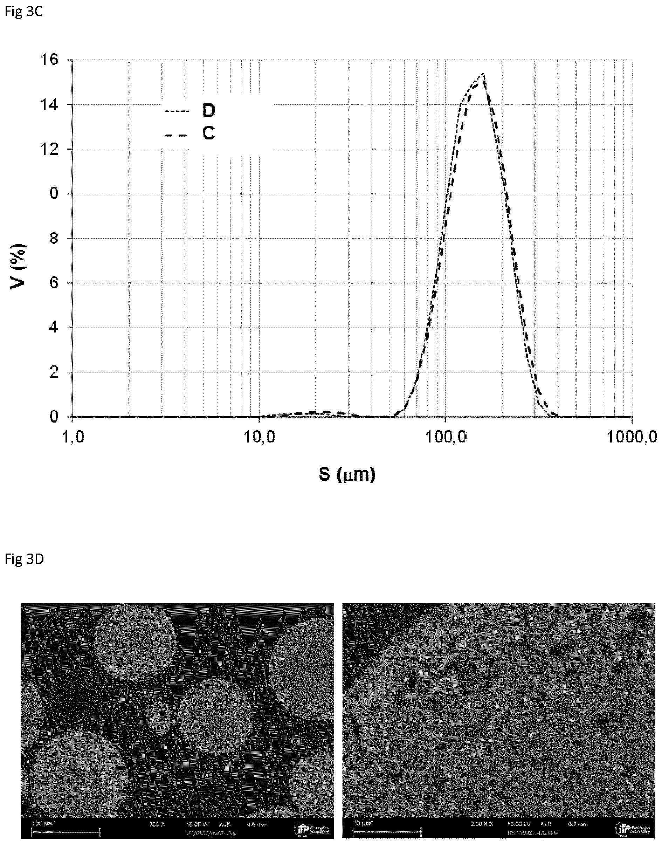

Les figures 3A, 3B, 3C et 3D concernent un solide porteur d'oxygène selon l'exemple 3 (exemple conforme à l'invention).

La FIG.3A est un diffractogramme obtenu par diffraction des rayons X (DRX) du solide porteur d'oxygène calciné à 800°C avant test de vieillissement simulant son utilisation dans un procédé CLC.

La FIG.3B est un diagramme représentant la conversion du méthane en fonction des cycles d'oxydo-réduction dans un procédé CLC utilisant le solide porteur d'oxygène.

La FIG.3C est un diagramme représentant la distribution de la taille des particules du solide porteur d'oxygène avant (C) et après (D) test de vieillissement simulant son utilisation dans un procédé CLC.

La FIG. 3D est un ensemble de clichés MEB d'une section polie d'un échantillon du solide porteur d'oxygène après tests de vieillissement simulant son utilisation dans un procédé CLC.

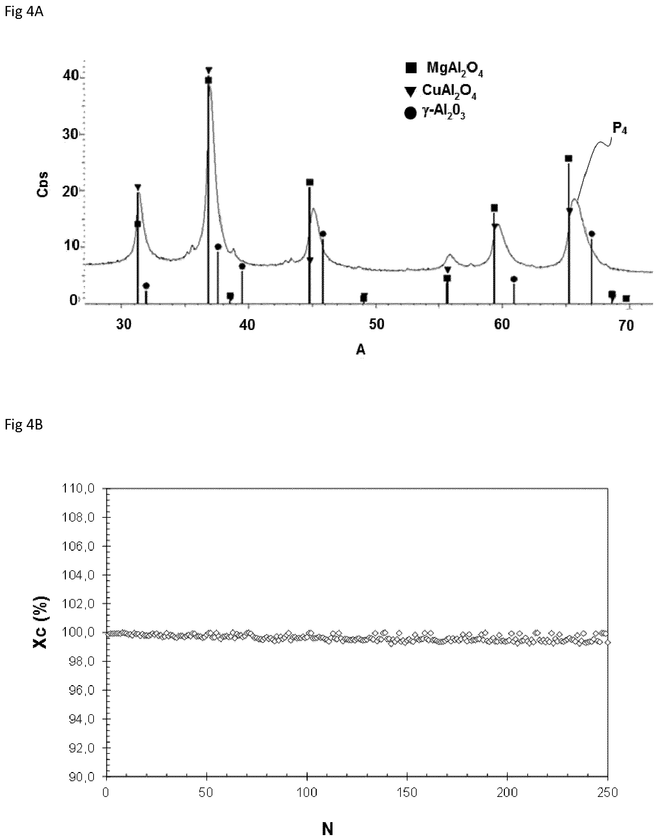

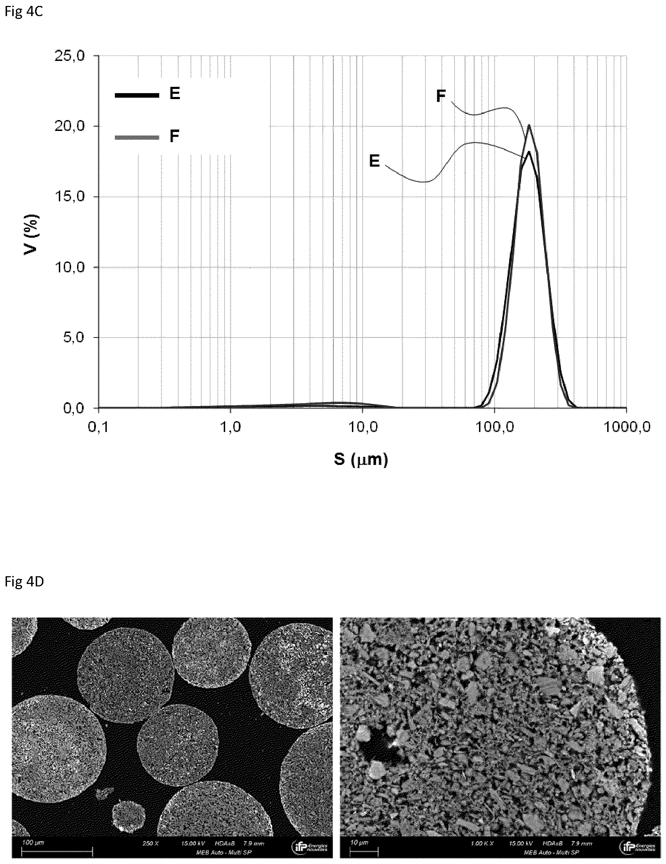

Les figures 4A, 4B, 4C et 4D concernent un solide porteur d'oxygène selon l'exemple 4 (exemple conforme à l'invention).

La FIG.4A est un diffractogramme obtenu par diffraction des rayons X (DRX) du solide porteur d'oxygène calciné à 900°C avant test de vieillissement simulant son utilisation dans un procédé CLC.

La FIG.4B est un diagramme représentant la conversion du méthane en fonction des cycles d'oxydo-réduction dans un procédé CLC utilisant le solide porteur d'oxygène.

La FIG. 4C est un diagramme représentant la distribution de la taille des particules du solide porteur d'oxygène avant (E) et après (F) test de vieillissement simulant son utilisation dans un procédé CLC.

La FIG. 4D est un ensemble de clichés MEB d'une section polie d'un échantillon du solide porteur d'oxygène après tests de vieillissement simulant son utilisation dans un procédé CLC.

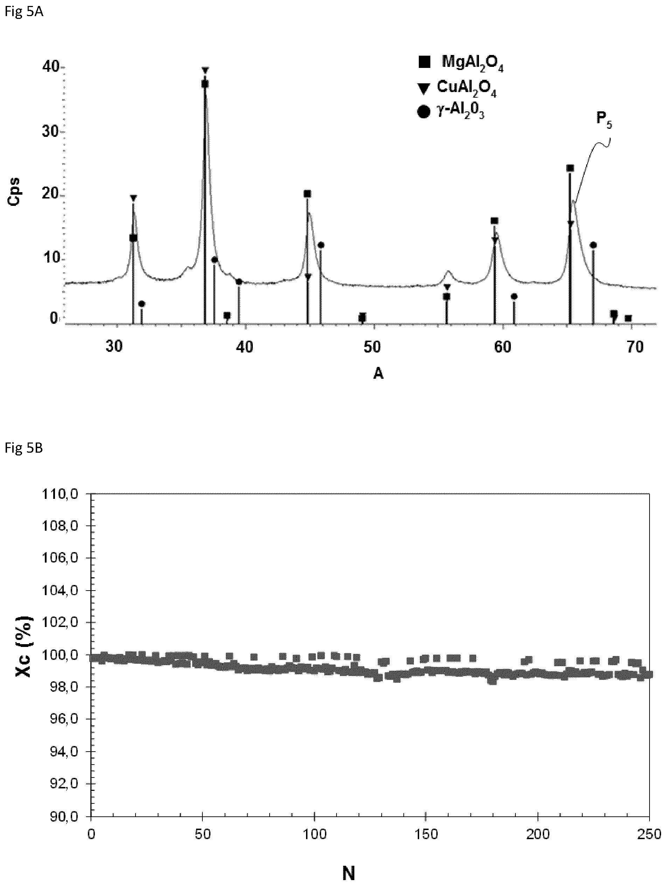

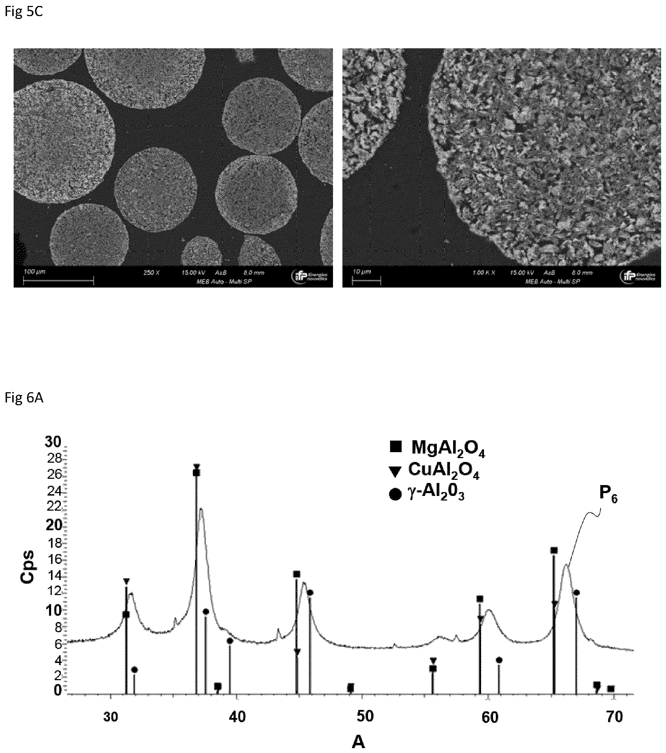

Les figures 5A, 5B, et 5C concernent un solide porteur d'oxygène selon l'exemple 5 (exemple conforme à l'invention).

La FIG.5A est un diffractogramme obtenu par diffraction des rayons X (DRX) du solide porteur d'oxygène calciné à 900°C avant test de vieillissement simulant son utilisation dans un procédé CLC.

La FIG.5B est un diagramme représentant la conversion du méthane en fonction des cycles d'oxydo-réduction dans un procédé CLC utilisant le solide porteur d'oxygène.

La FIG.5C est un ensemble de clichés MEB d'une section polie d'un échantillon du solide porteur d'oxygène après tests de vieillissement simulant son utilisation dans un procédé CLC.

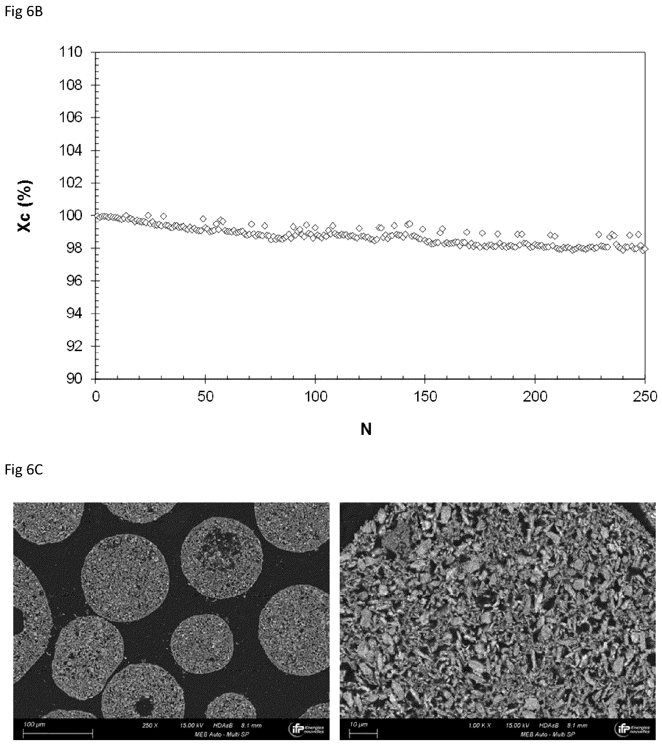

Les figures 6A, 6B, et 6C concernent un solide porteur d'oxygène selon l'exemple 6 (exemple conforme à l'invention).

La FIG.6A est un diffractogramme obtenu par diffraction des rayons X (DRX) du solide porteur d'oxygène calciné à 900°C avant test de vieillissement simulant son utilisation dans un procédé CLC.

La FIG.6B est un diagramme représentant la conversion du méthane en fonction des cycles d'oxydo-réduction dans un procédé CLC utilisant le solide porteur d'oxygène.

La FIG.6C est un ensemble de clichés MEB d'une section polie d'un échantillon du solide porteur d'oxygène après tests de vieillissement simulant son utilisation dans un procédé CLC.

## Description des modes de réalisation

L'objet de l'invention est de proposer un solide porteur d'oxygène pour un procédé d'oxydo-réduction en boucle chimique, tel qu'un procédé CLC, mais également pour d'autres procédés d'oxydo-réduction en boucle chimique tel qu'un procédé de reformage en boucle chimique (CLR en référence à l'expression « Chemical Looping Reforming » selon la terminologie anglo-saxonne) ou un procédé de CLOU (en référence à l'expression « Chemical Looping Oxygen Uncoupling » selon la terminologie anglo-saxonne). La présente invention concerne également la préparation et l'utilisation du solide porteur d'oxygène dans de tels procédés, en particulier dans un procédé CLC.

Les procédés CLC font généralement appel à deux réacteurs distincts : un réacteur de réduction et un réacteur d'oxydation. Dans le réacteur de réduction a lieu la réduction du solide porteur d'oxygène au moyen d'un combustible, ou plus généralement d'un gaz, liquide ou solide réducteur. Les effluents du réacteur de réduction contiennent principalement du $CO_2$ et de l'eau, permettant un captage facile du $CO_2$. Dans le réacteur d'oxydation, la restauration du solide porteur d'oxygène à son état oxydé par contact avec l'air ou tout autre gaz oxydant permet de générer corrélativement un effluent chaud vecteur d'énergie et un flux d'azote pauvre ou dépourvu d'oxygène (cas où de l'air est utilisé).

Dans la présente description il est surtout fait référence à l'utilisation du solide porteur d'oxygène dans un procédé CLC en lit fluidisé circulant, mais le solide porteur d'oxygène selon l'invention peut aussi être utilisé dans tout autre type de procédé d'oxydo-réduction en boucle chimique (CLC, CLR, CLOU) en lit fixe, mobile ou bouillonnant, ou encore en réacteur tournant.

## Le solide porteur d'oxygène

Le solide porteur d'oxygène comporte:

- du cuivre à une teneur totale X comprise entre 5% et 39% exprimée en poids d'oxyde de cuivre par rapport au poids total du solide porteur d'oxygène sous sa forme oxydée;
- une matrice en céramique au sein de laquelle est dispersé le cuivre, ladite matrice en céramique comportant, et de préférence étant essentiellement constituée par :

-- un premier spinelle sous-stoechiométrique de formule $Mg_aAl_bO_4$, et/ou
-- un deuxième spinelle sous-stoechiométrique de formule $Cu_cMg_dAl_eO_4$,

avec :

$$a = \frac{4}{\left(1 + \left(3 \times \left(\frac{(100 - X)}{Y} - 1\right) \times \frac{M_{MgO}}{M_{Al2O3}}\right)\right)}$$

$$b = \frac{8 \times (100 - X - Y)}{\left(Y \times \frac{M_{Al2O3}}{M_{MgO}} + 3 \times (100 - X - Y)\right)}$$

$$c = \frac{4X}{M_{CuO} \times \left(\frac{X}{M_{CuO}} + \frac{Y}{M_{MgO}} + 3 \times \frac{100 - X - Y}{M_{Al2O3}}\right)}$$

$$d = \frac{4Y}{M_{MgO} * \left(\frac{X}{M_{CuO}} + \frac{Y}{M_{MgO}} + 3 \times \frac{100 - X - Y}{M_{Al2O3}}\right)}$$

$$e = \frac{8 \times (100 - X - Y)}{M_{Al2O3} \times \left(\frac{X}{M_{CuO}} + \frac{Y}{M_{MgO}} + 3 \times \frac{100 - X - Y}{M_{Al2O3}}\right)}$$

$M_{MgO}$, $M_{CuO}$, $M_{Al2O3}$ étant les masses molaires respectives de MgO, CuO et $Al_2O_3$,

Y étant la quantité de MgO en pourcentage poids du solide porteur d'oxygène,

Avec X compris entre 5% et 39%, Y compris entre 1% et 23%, et Y < 26,223-0,6342X.

La composition du solide porteur d'oxygène selon l'invention s'entend comme étant une composition « initiale », ainsi que le sait l'homme du métier, c'est-à-dire après obtention du solide porteur d'oxygène selon le procédé de fabrication décrit et avant sa mise en oeuvre du porteur d'oxygène dans un procédé d'oxydo-réduction en boucle chimique, tel que le CLC.

Par une matrice en céramique « essentiellement constituée par », on entend que la matrice comprend au-delà de 95% de spinelle(s) sous-stoechiométrique(s) décrit(s) ci-dessus.

Il est précisé que, dans toute cette description, les expressions «compris(e)/constituant entre ... et ...», «comprenant /constituant entre ... et ... » doivent s'entendre comme incluant les bornes citées, sauf spécifié autrement.

Dans la présente demande, le terme «comprendre » est synonyme de (signifie la même chose que) « inclure » et « contenir », et est inclusif ou ouvert et n'exclut pas d'autres éléments non récités. Il est entendu que le terme « comprendre » inclut le terme exclusif et fermé « consister ».

Dans la présente description, par souci de simplification, on désigne par « premier » spinelle le spinelle sous-stoechiométrique de formule $Mg_aAl_bO_4$ et par « deuxième » spinelle le spinelle sous-stoechiométrique de formule $Cu_cMg_dAl_eO_4$.

La teneur totale en cuivre exprimée en pourcentage poids d'oxyde de cuivre (5%-39%) dans le solide porteur d'oxygène comprend le cuivre présent dans le deuxième spinelle sous-stoechiométrique si celui-ci est présent dans la matrice du porteur d'oxygène.

La proportion de cuivre du solide porteur d'oxygène est donnée pour le porteur d'oxygène sous sa forme initiale totalement oxydée, qui est la forme classique après sa préparation et lors de son stockage. Il en va de même pour la proportion de magnésium.

Dans le porteur d'oxygène selon l'invention, le cuivre constitue la masse active oxydo-réductrice, sous sa forme oxyde de cuivre/cuivre métallique ou intégré au deuxième spinelle de formule $Cu_cMg_dAl_eO_4$. Autrement dit, la matrice céramique $Cu_cMg_dAl_eO_4$ du porteur d'oxygène peut être considérée commet active dans le processus d'oxydo-réduction, à l'origine de la fonction de transporteur d'oxygène du solide porteur d'oxygène selon l'invention.

La teneur totale en cuivre X, exprimée en pourcentage poids d'oxyde de cuivre par rapport au poids total du solide porteur d'oxygène sous sa forme oxydée, est comprise entre 5% et 39%. Le cuivre est sous forme $CuO$ ou $Cu_cMg_dAl_eO_4$ ou un mélange des deux. De préférence, ladite teneur totale en cuivre est comprise entre 5% et 30%, plus préférentiellement ladite teneur totale en cuivre est comprise entre 10% et 30%, et encore plus préférentiellement ladite teneur totale en cuivre est comprise entre 10% et 20%.

La nature du spinelle, i.e. le premier spinelle sous-stoechiométrique ou le deuxième spinelle sous-stoechiométrique, dépend initialement du mode de préparation du porteur d'oxygène, et en particulier de la température de calcination opérée : on observe qu'à une température de calcination du porteur d'oxygène de 900°C, le deuxième spinelle sous-stoechiométrique est formé, alors qu'à une température de calcination de 800°C, le porteur d'oxygène est sous forme d'un oxyde mixte CuO/premier spinelle sous-stoechiométrique (présence visible de $CuO$ et du premier spinelle par analyse DRX). Il existe donc une température de calcination entre 800°C et 900°C à partir de laquelle l'oxyde de cuivre $CuO$ réagit avec le premier spinelle sous-stoechiométrique pour former le deuxième spinelle sous-stoechiométrique.

Indépendamment de sa structure initiale, le solide porteur d'oxygène peut être mis en oeuvre lors du procédé d'oxydo-réduction en boucle chimique, tel que le CLC, dans des conditions de température qui conduisent à la formation du deuxième spinelle sous-stoechiométrique.

On rappelle ci-après ce qu'il est communément entendu par spinelles, ainsi que la définition des spinelles sous-stoechiométriques intervenant dans la composition du solide porteur d'oxygène selon l'invention.

Le groupe des spinelles est constitué des oxydes dont la structure reproduit celle du spinelle minéral $MgAl_2O_4$. Parmi les oxydes présentant une structure spinelle figurent de nombreux composés naturels, telle la magnétite ($Fe_3O_4$), la chromite ($FeCr_2O_4$), la gahnite ($ZnAl_2O_4$). La formule générale des spinelles est $AB_2O_4$, où A est un cation bivalent et B un cation trivalent. Dans la structure spinelle, les ions oxyde ($O^{2-}$) forment un réseau cubique à faces centrées. Ce réseau possède deux sortes de sites interstitiels : des sites tétraédriques et des sites octaédriques. La maille primitive cubique du réseau spinelle possède en particulier 64 sites tétraédriques, dont 8 seulement sont occupés par des ions métalliques, et 32 sites octaédriques, dont 16 sont occupés. Deux types d'arrangements particuliers des cations ont été observés. Dans les spinelles de type normal, les ions trivalents occupent les sites octaédriques et les ions bivalents occupent les sites tétraédriques. Chaque ion oxyde est ainsi réuni à un ion bivalent et à trois ions trivalents. Dans les spinelles de type inverse, les sites tétraédriques sont occupés par la moitié des ions trivalents et les sites octaédriques par l'autre moitié des ions trivalents et par les ions divalents. Il existe également des spinelles où les deux types de cations occupent à la fois les sites tétra et octaédriques: ce sont des spinelles mixtes dont les deux cas précédents sont les cas limites (SMIT et WIJN, Les Ferrites, Techn. Philipps, 1961).

L'alumine gamma est couramment décrite comme une structure spinelle lacunaire, dans laquelle les ions oxyde présentent approximativement un empilement cubique compact. Chaque maille d'alumine contient 21⅓ ions aluminium ($Al^{3+}$) répartis sur les sites octaédriques et tétraédriques, tandis que les $2\frac{2}{3}$ lacunes sont distribuées aléatoirement dans les sites tétraédriques. En conditions oxydantes et à température élevée, des cations $M^{2+}$ peuvent s'insérer dans ces lacunes, en même temps que des ions oxydes complètent l'empilement cubique compact caractéristique du spinelle afin de conserver l'électroneutralité du réseau cristallin. Lorsqu'une quantité stoechiométrique de métal M est présente (i.e. un $M^{2+}$ et un $O^{2-}$ par maille d'$Al_2O_3$), le spinelle $MAl_2O_4$ est ainsi obtenu (M= Mg, Ca, Zn, Fe, Cu...). Lorsque la quantité de cations insérés est inférieure à la stoechiométrie, un spinelle sous-stoechiométrique est obtenu, c'est-à-dire que toutes les lacunes ne sont pas occupées par un cation $M^{2+}$.

Ainsi, la formation d'un spinelle à partir de MgO et d'$Al_2O_3$ à un ratio molaire n procède selon l'équation ci-dessous (A. P. Tomsia and A. M. Glaeser, Ceramic Microstructures. Control at the Atomic Level, Springer US, Boston, MA, 1998) :

$$MgO + n\ Al_2O_3 \rightarrow (1+3n)/4\ Mg_{4/(1+3n)}\ Al_{8n/(1+3n)}O_4$$

Si n est supérieur à 1, le spinelle obtenu est sous-stoechiométrique en Mg.

### Premier spinelle sous-stoechiométrique de formule $Mg_aAl_bO_4$ :

Dans la formule du premier spinelle, les indices a et b, liés par les teneurs en cuivre et magnésium, s'expriment selon les relations suivantes :

$$a = \frac{4}{\left(1 + \left(3 \times \left(\frac{(100 - X)}{Y} - 1\right) \times \frac{M_{MgO}}{M_{Al2O3}}\right)\right)}$$

Et

$$b = \frac{8 \times (100 - X - Y)}{\left(Y \times \frac{M_{Al2O3}}{M_{MgO}} + 3 \times (100 - X - Y)\right)}$$

$M_{MgO}$ et $M_{Al2O3}$ sont les masses molaires respectives de MgO et $Al_2O_3$.

X est la quantité de CuO en pourcentage poids du solide porteur d'oxygène, et Y est la quantité de MgO en pourcentage poids du solide porteur d'oxygène,

X est compris entre 5% et 39%, et Y est compris entre 1% et 23%.

Afin d'assurer la sous-stoechiométrie, la relation suivante doit être respectée : Y < -0,6342X + 26,223.

A titre d'exemple, pour une teneur totale en cuivre, exprimée sous forme CuO, de 13% dans le porteur d'oxygène, a est environ égal à 0,72 et b est environ égal à 2,19, ce qui correspond à une teneur en MgO de 18%.

**Deuxième spinelle sous-stoechiométrique de formule $Cu_cMg_dAl_eO_4$:**

Dans la formule du deuxième spinelle, les indices c, d et e, liés par les teneurs en cuivre et magnésium, s'expriment selon les relations suivantes :

$$c = \frac{4X}{M_{CuO} \times \left(\frac{X}{M_{CuO}} + \frac{Y}{M_{MgO}} + 3 \times \frac{100 - X - Y}{M_{Al2O3}}\right)}$$

$$d = \frac{4Y}{M_{MgO} * \left(\frac{X}{M_{CuO}} + \frac{Y}{M_{MgO}} + 3 \times \frac{100 - X - Y}{M_{Al2O3}}\right)}$$

$$e = \frac{8 \times (100 - X - Y)}{M_{Al2O3} \times \left(\frac{X}{M_{CuO}} + \frac{Y}{M_{MgO}} + 3 \times \frac{100 - X - Y}{M_{Al2O3}}\right)}$$

$M_{MgO}$, $M_{CuO}$, $M_{Al2O3}$ sont les masses molaires respectives de MgO, CuO et $Al_2O_3$.

On rappelle que les masses molaires de MgO, CuO et $Al_2O_3$$M_{CuO}$ sont les suivantes :

$M_{MgO}$ = 40,305 g/mol, $M_{CuO}$ = 79,546 g/mol, et $M_{Al2O3}$ = 101,96 g/mol.

X est la quantité de CuO en pourcentage poids du solide porteur d'oxygène, et Y est la quantité de MgO en pourcentage poids du solide porteur d'oxygène,

X est compris entre 5% et 39% et Y est compris entre 1% et 23%.

La relation suivante est respectée pour assurer la sous-stoechiométrie du deuxième spinelle : Y < -0,6342X + 26,223.

A titre d'exemple, pour une teneur totale en cuivre, exprimée sous forme CuO, de 11,5% dans le porteur d'oxygène, c est environ égal à 0,20, d est environ égal à 0,13, et e est environ égal à 2,44, ce qui correspond à une teneur en MgO de 3,5%.

D'un point de vue théorique, le deuxième spinelle, obtenu après calcination au-delà de 800°C, typiquement à 900°C, est sous-stoechiométrique tant que e>2 (strictement). En pratique, afin d'assurer la formation d'un spinelle sous-stoechiométrique, les teneurs en CuO et en MgO choisies pour le solide porteur d'oxygène sont telles que e>2,05 afin de s'assurer d'avoir un excès d'alumine par rapport au cuivre et au magnésium.

Dans le cadre de l'invention, on se limite aux valeurs de X et Y comprises dans le triangle représenté à la FIG.1, pour lesquelles e>2,05, afin d'assurer la formation d'un spinelle sous-stoechiométrique. Ceci est également traduit par la relation Y < -0,6342X + 26,223, avec X compris entre 5% et 39% et Y compris entre 1% et 23%.

Lorsque le solide porteur d'oxygène selon l'invention est calciné à plus haute température que 800°C, l'oxyde de cuivre s'insère dans la structure du premier spinelle sous-stoechiométrique $Mg_aAl_bO_4$ pour former un autre spinelle sous-stoechiométrique, le deuxième spinelle, de formule $Cu_cMg_dAl_eO_4$ où c, d et e dépendent à la fois de la teneur en magnésium et en cuivre. L'homme du métier choisira aisément les teneurs adéquates en Cu et Mg afin de ne pas remplir la totalité des sites octaédriques et tétraédriques de la structure spinelle de l'alumine.

Différentes méthodes sont connues de l'homme de l'art pour préparer les spinelles, dont certaines sont rappelées dans le brevet FR2934263.

Le porteur d'oxygène selon l'invention, comportant une matrice céramique à structure spinelle sous-stoechiométrique telle que définie plus haut, permet d'améliorer significativement la distribution du cuivre au cours des cycles redox du procédé d'oxydo-réduction en boucle chimique, e.g. du procédé CLC, notamment en comparaison avec des porteurs d'oxygènes tels que décrit dans le brevet FR3061036. Sans être liés à une théorie particulière, les inventeurs attribuent l'amélioration substantielle obtenue en présence d'un spinelle sous-stoechiométrique de Mg à l'insertion du cuivre dans la structure spinelle de l'alumine à chaque cycle d'oxydation, évitant ainsi la transformation de l'alumine gamma en alumine alpha et forçant le cuivre à se disperser à nouveau au sein du support à chaque cycle.

Selon un mode de réalisation, le solide porteur d'oxygène comporte une texture macroporeuse, cette porosité spécifique étant caractérisée comme suit :

- un volume poreux total du solide porteur d'oxygène Vtot, mesuré par porosimétrie au mercure, compris entre 0,05 et 1,2 ml/g ;

- un volume poreux des macropores constituant au moins 10% de Vtot ;

- une distribution en taille des macropores au sein du solide porteur d'oxygène, mesurée par porosimétrie au mercure, supérieure à 50 nm et inférieure ou égale à 7 $\mu$m.

Cette texture macroporeuse est la texture initiale du solide porteur d'oxygène, c'est-à-dire avant toute utilisation dans un procédé d'oxydo-réduction en boucle chimique tel que le CLC.

Une telle texture macroporeuse initiale du solide porteur d'oxygène empêche davantage la migration de la masse active, i.e. le cuivre, au sein des particules.

On rappelle que selon la nomenclature de l'IUPAC, on parle de micropores pour les pores dont la taille (l'ouverture) est inférieure à 2 nm, de mésopores pour les pores dont la taille est comprise entre 2 nm et 50 nm, et de macropores pour les pores de taille supérieure à 50 nm.

On entend par volume poreux total le volume mesuré par intrusion au porosimètre à mercure selon la norme ASTM D4284-83 à une pression maximale de 4000 bar (400 MPa), utilisant une tension de surface de 484 dyne/cm et un angle de contact de 140°. L'angle de mouillage a été pris égal à 140° en suivant les recommandations de l'ouvrage « Techniques de l'ingénieur, traité analyse et caractérisation », pages 1050-1055, écrit par Jean Charpin et Bernard Rasneur.

Le volume poreux total du solide est mesuré par porosimétrie au mercure, plus précisément la mesure porte sur le volume de mercure injecté lorsque la pression exercée augmente de 0,22 MPa à 413 MPa. Le volume poreux total Vtot du solide porteur d'oxygène est plus préférentiellement compris entre 0,1 ml/g et 0,85 ml/g.

De manière plus préférée, le volume poreux des macropores constitue au moins 40% de Vtot du solide porteur d'oxygène, et encore plus préférentiellement au moins 50% de Vtot. Le reste du volume poreux peut être indifféremment constitué de microporosité ou de mésoporosité dans quelque proportion que ce soit.

La distribution en taille des macropores au sein des particules, mesurée par porosimétrie au mercure, est plus préférentiellement supérieure à 50 nm et inférieure ou égale à 3 $\mu$m, et de manière encore plus préférée supérieure à 50 nm et inférieure ou égale 500 nm.

Le volume des macropores est mesuré par porosimétrie par intrusion de mercure selon la norme ASTM D4284-83 à une pression maximale de 4000 bar (400 MPa), utilisant une tension de surface de 484 dyne/cm et un angle de contact de 140°. On fixe à 0,2 MPa la valeur à partir de laquelle le mercure remplit tous les vides intergranulaires, et on considère qu'au-delà le mercure pénètre dans les pores de l'échantillon.

Le volume des mésopores est mesuré de la même manière que le volume des macropores.

Le volume macroporeux est défini comme étant le volume cumulé de mercure introduit à une pression comprise entre 0,2 MPa et 30 MPa, correspondant au volume contenu dans les pores de diamètre apparent supérieur à 50 nm.

Le volume mésoporeux est défini comme étant le volume cumulé de mercure introduit à une pression comprise entre 30 MPa et 400 MPa, correspondant au volume contenu dans les pores de diamètre apparent compris entre 2 et 50 nm.

Le volume des micropores est mesuré par porosimétrie à l'azote. L'analyse quantitative de la microporosité est effectuée à partir de la méthode "t" (méthode de Lippens-De Boer, 1965) qui correspond à une transformée de l'isotherme d'adsorption de départ comme décrit dans l'ouvrage « Adsorption by powders and porous solids. Principles, methodology and applications » écrit par F. Rouquérol, J. Rouquérol et K. Sing, Academic Press, 1999.

Selon l'invention, le solide porteur d'oxygène peut être préparé à partir du traitement de particules solides obtenues par une technique de séchage par atomisation d'une suspension aqueuse d'oxyde(s), d'hydroxydes et/ou d'oxyhydroxydes d'aluminium de taille spécifique. La poudre micronisée obtenue après séchage peut alors être calcinée, par exemple à 700°C, pour transformer les hydroxydes et/ou oxyhydroxydes d'aluminium en alumine gamma. Le spinelle sous-stoechiométrique de formule $Mg_aAl_bO_4$ peut alors être formé par imprégnation à sec de précurseurs solubles du Mg, typiquement par du nitrate de magnésium. Après séchage et calcination des particules, le solide porteur d'oxygène selon l'invention peut alors être imprégné à sec par un précurseur soluble du cuivre, typiquement le nitrate de cuivre. L'imprégnation par les précurseurs solubles de Cu et de Mg peut également être réalisée simultanément. Alternativement, les précurseurs du cuivre et du magnésium peuvent être ajoutés dans la suspension aqueuse d'oxyde(s), d'hydroxydes et/ou d'oxyhydroxydes d'aluminium préalablement à son séchage par atomisation. La préparation du solide porteur d'oxygène selon l'invention est détaillée plus loin dans la description.

Le solide porteur d'oxygène selon l'invention est sous la forme de particules, qui peuvent être fluidisées dans le procédé d'oxydo-réduction en boucle chimique, notamment être mises en oeuvre en lit fluidisé circulant. Il peut s'agir de particules fluidisables (poudre fluidisable, généralement appelé « fluidisable carrier » en anglais) appartenant aux groupes A, B ou C de la classification de Geldart (D. Geldart. « Types of gas fluidization ». Powder Technol. 7(5), 1973, p.285-292), et de préférence les particules appartiennent au groupe A ou au groupe B de la classification de Geldart, et de préférence au groupe B de la classification de Geldart.

De manière préférée, les particules du solide porteur d'oxygène ont une granulométrie telle que plus de 90% des particules ont une taille comprise entre 50 $\mu$m et 600 $\mu$m, plus préférentiellement une granulométrie telle que plus de 90% des particules ont une taille comprise entre 80 $\mu$m et 400 $\mu$m, encore plus préférentiellement une granulométrie telle que plus de 90% des particules ont une taille comprise entre 100 $\mu$m et 300 $\mu$m, et encore plus préférentiellement une granulométrie telle que plus de 95% des particules ont une taille comprise entre 100 $\mu$m et 300 $\mu$m.

De préférence, les particules du solide porteur d'oxygène ont une densité de grain comprise entre 500 kg/m$^3$ et 5000 kg/m$^3$, de préférence une densité de grain comprise entre 800 kg/m$^3$ et 4000 kg/m$^3$, et encore plus préférentiellement une densité de grain comprise entre 1000 kg/m$^3$ et 3000 kg/m$^3$.

Les particules du solide porteur d'oxygène sont de préférence sensiblement sphériques.

La distribution en taille et la morphologie des particules pour une utilisation dans un autre type de procédé en boucle chimique (CLC, CLR, CLOU) en lit fixe, en lit mobile ou en réacteur tournant sont adaptées au procédé envisagé. Par exemple, dans le cas d'une utilisation du solide porteur d'oxygène dans un procédé mettant en oeuvre une technologie de lit fixe ou de réacteur tournant, la taille préférée des particules est supérieure à 400 $\mu$m, afin de minimiser les pertes de charge dans le ou les réacteurs, et la morphologie des particules n'est pas nécessairement sphérique. La morphologie est dépendante du mode de mise en forme, par exemple sous forme d'extrudés, de billes, de monolithes ou de particules de géométrie quelconque obtenues par broyage de plus grosses particules. Dans le cas d'une mise en forme de type monolithe, le solide porteur d'oxygène, sous forme de particules, est déposé sur la surface des canaux de monolithes céramiques par les méthodes d'enduction connues de l'homme de l'art, ou bien le monolithe lui-même est constitué des particules selon l'invention.

La taille des particules peut être mesurée par granulométrie laser.

La distribution en taille des particules du solide porteur d'oxygène est de préférence mesurée à l'aide d'un granulomètre laser, par exemple Malvern Mastersizer 3000®, de préférence en voie liquide, et en utilisant la théorie de Fraunhofer. Une telle technique et un tel matériel peuvent également être utilisés pour mesurer la taille d'autres grains comme les grains d'oxydes précurseurs de la matrice céramique.

L'obtention de particules du porteur d'oxygène dans la gamme de taille souhaitée nécessite une étape de mise en forme (voir étapes (B) et (F) décrites plus bas) à partir de grains de plus petite dimension, dont la taille est comprise entre 0,1 $\mu$m et 20 $\mu$m, préférentiellement entre 0,5 $\mu$m et 5 $\mu$m, et de manière plus préférée entre 1 $\mu$m et 3 $\mu$m. La mise en forme peut être réalisée selon toutes les techniques connues de l'homme de l'art permettant d'obtenir des particules, telles que l'extrusion, le compactage, la granulation humide ou à sec (« wet or dry granulation » en anglais), par exemple l'agglomération sur assiette granulatrice ou tambour granulateur, la lyophilisation (« freeze granulation » en anglais), ou par des techniques de coagulation de gouttes (« oil drop » en anglais), et de préférence selon une technique de séchage par atomisation, d'agglomération sur assiette granulatrice ou tambour granulateur, permettant d'obtenir des particules de forme sphérique.

Une étape de tamisage et/ou de criblage (classification ou séparation par exemple au moyen d'un cyclone) peut être en outre réalisée afin de sélectionner les particules de la granulométrie souhaitée.

**Préparation du solide porteur d'oxygène**

Le procédé de préparation du porteur d'oxygène comporte plusieurs mises en oeuvre possibles, qui se distinguent notamment par l'ordre d'introduction des éléments cuivre et magnésium, comme détaillé à l'étape (E).

Le solide porteur d'oxygène peut être préparé selon un procédé comportant les étapes suivantes :

**Etape (A) : préparation d'une suspension d'oxyde(s) précurseur(s) d'une matrice céramique**

L'étape (A) comporte la préparation d'une suspension aqueuse de particules d'alumine et d'un liant aluminique, ladite suspension présentant des caractéristiques rhéologiques adéquates pour le pompage et la pulvérisation. Les particules d'alumine forment des grains dont la taille est comprise entre 0,1 $\mu$m et 20 $\mu$m, de préférence comprise entre 0,5 $\mu$m et 5 $\mu$m, et de manière plus préférée comprise entre 1 $\mu$m et 3 $\mu$m.

L'alumine utilisée peut être choisie parmi les alumines de transition, de préférence parmi l'alumine gamma, delta, thêta et êta.

Le liant aluminique peut être choisi parmi la boehmite et/ou les hydroxydes d'aluminium (bayerite, gibbsite, nordstrandite). Ils peut être ajouté à hauteur de 5 % à 30 % poids par rapport à la masse d'oxyde d'aluminium en suspension. Le liant aluminique peut être peptisé par 1 à 10% poids d'un acide choisi parmi HCl, $H_2SO_4$ ou $HNO_3$, préférentiellement $HNO_3$.

Un ou plusieurs liants organique(s) et/ou inorganique(s) peuvent être ajoutés à la suspension afin d'ajuster et de contrôler la rhéologie de la suspension et d'assurer la cohésion des particules qui sont obtenues à l'issue de l'étape de mise en forme, avant la consolidation par calcination dans une étape ultérieure.

Le ou les liants organiques de masse molaire variables peuvent être choisis parmi le polyethylene glycol (PEG), l'alcool polyvinylique (PVA), le polyacrylate (PA), le polyvinylpyrrolidone (PVP), etc. Ils peuvent être ajoutés à hauteur de 0,5 % à 6 % poids par rapport à la masse d'oxyde(s) en suspension.

Un ou plusieurs agents porogènes destinés à augmenter la macroporosité des particules peuvent également être ajoutés à la suspension. De préférence, lorsque de tels agents sont additionnés à la solution, leur quantité est de préférence inférieure à 25% poids par rapport à la masse d'oxyde(s) en suspension. De tels agents sont typiquement des composés organiques que l'on peut brûler, tel que de l'amidon, de la cellulose, des polymères tels que le polypropylène, le latex, le poly(méthacrylate de méthyle) (PMMA).

**Etape (B) : séchage par atomisation**

Lors de cette étape, la suspension obtenue à l'étape (A) est séchée par atomisation : on pulvérise la suspension en fines gouttelettes dans une chambre de séchage à l'aide de moyens de pulvérisation, par exemple à l'aide d'une buse de pulvérisation pneumatique (bi-fluide) ou hydraulique (monofluide), et on met simultanément en contact simultanée ces gouttelettes avec un gaz vecteur chaud, de préférence de l'air ou de l'azote, porté à une température comprise entre 180°C et 350°C. Le gaz vecteur chaud peut être introduit avec un flux co-courant (mode plafond) ou un flux mixte (mode fontaine) permettant l'évaporation du solvant et l'obtention de particules sphériques à la granulométrie souhaitée.

Cette étape permet avantageusement la formation de particules de granulométrie désirée. De manière préférée, cette étape est réalisée de manière à produire des particules de granulométrie suivante : plus de 90% des particules ont une taille comprise entre 50 et 600$\mu$m, de préférence plus de 90% des particules ont une taille comprise entre 80 $\mu$m et 400 $\mu$m, encore plus préférentiellement plus de 90% des particules ont une taille comprise entre 100 $\mu$m et 300 $\mu$m, et encore plus préférentiellement plus de 95% des particules ont une taille comprise entre 100 $\mu$m et 300 $\mu$m.

Une étape de criblage optionnelle (D) ultérieure peut être réalisée afin d'obtenir la granulométrie désirée, décrite plus bas.

**Etape (C) : Calcination des particules séchées par atomisation**

Les particules issues du séchage par atomisation à l'étape (B) sont calcinées sous air à une température comprise entre 400°C et 1400°C, préférentiellement entre 600°C et 1200°C, et de manière très préférée entre 650°C et 950°C. Cette étape de calcination a un impact sur la tenue mécanique des particules. Cette calcination peut être effectuée pendant une durée de 1 à 24 heures, et de préférence pendant une durée de 3 à 6 heures.

Il est possible de réaliser une rampe de montée en température comprise entre 1°C/min et 50°C/min, et de préférence entre 5°C/min et 20°C/min, pour atteindre la température de calcination donnée, notamment lorsque l'intégration de précurseurs du cuivre et du magnésium au solide porteur d'oxygène est réalisé selon l'étape (E) (e3) décrite plus bas. La durée pour mettre en oeuvre cette rampe de température n'est pas comprise dans les gammes de durée de calcination indiquées ci-dessus.

Si l'incorporation du précurseur de Mg, et éventuellement de Cu, est réalisé avant l'étape (C), tel que décrit à l'étape (E) (e3), la calcination à cette étape (C) est alors de préférence à une température comprise entre 700°C et 1400°C, de préférence réalisée sous air, et plus préférentiellement entre 700°C et 1000°C, encore plus préférentiellement entre 750°C et 950°C, de manière encore plus préférée entre 800°C et 950°C voire entre 900°C et 950°C en particulier lorsque le précurseur de Cu a été préalablement intégré. Dans le cas d'une telle incorporation de précurseur(s) avant l'étape (C) comme décrit à l'étape (E) (e3), la durée de calcination est alors de préférence effectuée pendant une durée de 5 heures à 15 heures. Cette calcination peut alors permettre alors la formation du premier spinelle et/ou du deuxième sous-stoechiométrique.

**Etape (D) : criblage optionnel des particules**

Un criblage peut être réalisé à l'issu de l'étape de calcination (C) visant à sélectionner les particules dans une gamme de taille désirée. En particulier, le criblage peut être réalisé de manière à obtenir des particules ayant une taille comprise entre 50 $\mu$m et 600 $\mu$m, plus préférentiellement comprise entre 80 $\mu$m et 400 $\mu$m, et encore plus préférentiellement comprise entre 100 $\mu$m et 300 $\mu$m.

Le criblage peut être effectué par une séparation des particules au moyen d'un cyclone, ou tout autre moyen de séparation.

**Etape (E) : intégration de Cu et Mg**

L'étape (E) comporte soit l'étape (e1) suivie de l'étape (e2), soit l'étape (e3) où du Cu et du Mg sont intégrés avant l'étape (B), soit l'étape (e3) où seul du Mg est intégré avant l'étape (B) en combinaison avec l'étape (e2).

L'étape (e1) permet d'associer le Mg à l'alumine pour produire le spinelle sous-stoechiométrique $Mg_aAl_bO_4$.

L'étape (e2) permet d'associer l'oxyde de Cu au spinelle sous-stoechiométrique obtenu à l'étape (e1) ou alternativement obtenu à l'issu de l'étape (C) si l'étape (e3) est mise en oeuvre.

L'étape (e3) permet d'associer le Mg, et éventuellement le Cu dès l'étape (A) de préparation de la suspension d'oxyde d'aluminium. L'étape (e3) est combinée à l'étape (e2) si le Cu n'est pas intégré lors de l'étape (e3).

**Etape (e1) : imprégnation, séchage et calcination des particules d'alumine afin d'insérer du Mg**

Selon cette étape (e1), les particules calcinées obtenues à l'issue de l'étape (C), et optionnellement criblées à l'issue de l'étape (D), sont (i) imprégnées par une solution aqueuse ou organique contenant au moins un composé précurseur soluble du Mg.

De préférence l'imprégnation à sec est réalisée avec une solution aqueuse contenant du nitrate de magnésium hydraté. La concentration en précurseur(s) soluble(s) du Mg, e.g. le nitrate de Mg hydraté, de la solution d'imprégnation est calculée afin que Y soit compris entre 1% et 23%, avec Y < -0,6342X + 26,223, et avec X compris entre 5% et 39%.

Les particules imprégnées sont ensuite (ii) séchées, par exemple à l'étuve, et de préférence sous air ou sous atmosphère contrôlée (humidité relative contrôlée, sous azote). Par atmosphère contrôlée on entend par exemple avec une humidité relative contrôlée ou sous azote. Ce séchage est réalisé à une température comprise entre 30°C et 200°C.

Plus préférentiellement ce séchage est effectué sous air à une température comprise entre 100°C et 150°C.

L'imprégnation peut être réalisée en une ou plusieurs étapes successives.

Si l'imprégnation est réalisée en plusieurs étapes successives, une étape intermédiaire de calcination à une température comprise entre 400°C et 600°C est de préférence réalisée.

Enfin, les particules imprégnées et séchées sont ensuite (iii) calcinées. Cette deuxième (ou n$^{ième}$ si l'imprégnation est réalisée en plusieurs fois) étape de calcination (la première étant celle de l'étape (C)) aboutit au spinelle sous-stoechiométrique.

Cette calcination (iii) est effectuée entre 700°C et 1400°C, de préférence sous air, plus préférentiellement entre 700°C et 1000°C, et encore plus préférentiellement entre 750°C et 950°C.

Cette calcination peut être effectuée pendant une durée de 1 à 24 heures, et de préférence pendant une durée de 3 à 6 heures .

Avantageusement, on applique une rampe de montée en température comprise entre 1°C/min et 50°C/min, et de préférence entre 5°C/min et 20°C/min, pour atteindre la température de calcination donnée. La durée pour mettre en oeuvre cette rampe de température n'est pas comprise dans les gammes de durée de calcination indiquées ci-dessus.

Cette calcination peut permettre la formation du premier spinelle sous-stoechiométrique.

**Etape (e2) : imprégnation du spinelle sous-stoechiométrique afin d'intégrer du Cu**

Selon cette étape (e2), les particules calcinées obtenues à l'issue de l'étape (e1) sont (j) imprégnées par une solution aqueuse ou organique contenant au moins un composé précurseur soluble du cuivre.

Alternativement, ladite imprégnation (j) peut être effectuée sur les particules calcinées issues de l'étape (C) ou optionnellement criblée issues de l'étape (D) dans le cas où l'étape (e3) décrite plus loin est mise en oeuvre, sans que du Cu ne soit intégré lors d'une des sous-étapes (k), (kk) et (kkk) de l'étape (e3).

De préférence ladite imprégnation est réalisée avec une solution aqueuse contenant du nitrate de cuivre hydraté $Cu(NO_3)_2.xH_2O$. La concentration en précurseur(s) soluble(s) du Cu, e.g. le nitrate de Cu hydraté, de la solution aqueuse est calculée afin de respecter la relation $Y < -0,6342X + 26,223$, avec X compris entre 5% et 39% et Y compris entre 1% et 23%.

Les particules imprégnées sont ensuite (jj) séchées, par exemple à l'étuve, et de préférence sous air ou sous atmosphère contrôlée (humidité relative contrôlée, sous azote). Ce séchage est réalisé à une température comprise entre 30°C et 200°C.

Plus préférentiellement ce séchage est effectué sous air à une température comprise entre 100°C et 150°C.

Enfin, les particules imprégnées et séchées sont ensuite (jjj) calcinées. Cette troisième (ou $n^{ième}$ si l'imprégnation est réalisée en plusieurs fois, ou encore deuxième si l'étape (e3)(kkk) est mise en oeuvre), étape de calcination (la première étant celle de l'étape (C)) aboutit au solide porteur d'oxygène.

Cette calcination permet la formation du premier spinelle et/ou du deuxième sous-stoechiométrique.

L'imprégnation peut être réalisée en une ou plusieurs étapes successives.

Si l'imprégnation est réalisée en plusieurs étapes successives, une étape intermédiaire de calcination à une température comprise entre 400°C et 600°C est de préférence réalisée.

Cette calcination (jjj) est effectuée entre 700°C et 1400°C, de préférence sous air, plus préférentiellement entre 700°C et 1000°C, et encore plus préférentiellement entre 800°C et 950°C, voire entre 900°C et 950°C.

Cette calcination peut être effectuée pendant une durée de 1 à 24 heures, et de préférence pendant une durée de 5 à 15 heures .

Avantageusement, on applique une rampe de montée en température comprise entre 1°C/min et 50°C/min, et de préférence entre 5°C/min et 20°C/min, pour atteindre la température de calcination donnée. La durée pour mettre en oeuvre cette rampe de température n'est pas comprise dans les gammes de durée de calcination indiquées ci-dessus.

**Etape (e3) Ajout des précurseurs de Mg, et éventuellement de Cu, avant l'étape (B)**

Selon l'étape (e3), et de manière alternative à ce qui est réalisé lors de la succession des étapes (e1) et (e2), les précurseur du Mg et éventuellement du Cu sont associés à la matrice en alumine avant l'étape (B) de séchage par atomisation, avant ou après la préparation de la suspension à l'étape (A), afin de former une suspension comportant les précurseurs de Mg, et éventuellement de Cu.

L'incorporation des précurseurs peut alors se faire selon l'une des trois sous-étapes (k), (kk) ou (kkk) suivantes, et de préférence selon la sous-étape (kkk) :

(k) l'imprégnation des particules d'alumine utilisées pour préparer la suspension à l'étape (A) par au moins un composé précurseur du Mg, et éventuellement par un composé précurseur du Cu. Lesdits composés précurseurs du cuivre et du magnésium sont préférentiellement les nitrates de cuivre et de magnésium hydratés. Cette sous-étape (k) est réalisée avant l'étape (A) : l'imprégnation est réalisée avant la mise en suspension des particules d'alumine. Une étape de séchage suivie d'une étape de calcination, telles que décrites à l'étape (e1) (ii) et (iii) peuvent être réalisées à la suite de cette imprégnation (k).

(kk) l'addition d'au moins un précurseur soluble du Mg, et éventuellement d'un précurseur soluble du Cu, à la suspension préparée à l'étape (A). Avantageusement, le composé soluble est un nitrate hydraté pour le précurseur soluble du Cu et un nitrate de cuivre hydraté pour le précurseur soluble de Mg. Cette sous-étape (kk) est donc réalisée après l'étape (A) et avant l'étape (B).

(kkk) l'addition à la suspension préparée à l'étape (A) d'au moins un oxyde ou hydroxyde de Mg, et éventuellement d'un oxyde ou hydroxyde de Cu. Ces composés ajoutés à la suspension préparée à l'étape (A) sont des solides sous la forme de grains, de taille comprise entre 0,1 $\mu$m et 20 $\mu$m, de préférence comprise entre 0,1 $\mu$m et 5 $\mu$m, et de manière plus préférée comprise entre 0,1 $\mu$m et 1 $\mu$m. Cette sous-étape (kkk) est donc réalisée après l'étape (A) et avant l'étape (B).

Il est entendu que l'étape (e2) est nécessairement réalisée en combinaison avec l'étape (e3) si aucun composé précurseur soluble du Cu ou oxyde ou hydroxyde de Cu n'est ajouté lors des sous-étapes (k), (kk) et (kkk) à l'étape (e3). Cela permet en effet d'intégrer le Cu par imprégnation du spinelle sous-stoechiométrique obtenu à l'issu de l'étape (C) quand l'étape (e3) est mise en oeuvre.

Dans l'étape (e3) la concentration en précurseurs du Mg et/ou du Cu est calculée comme défini précédemment pour les étapes (e1) et (e2).

Avantageusement, la mise en oeuvre de l'étape (e3) avec l'intégration à la fois le Cu et le Mg permet de simplifier le procédé de préparation du porteur d'oxygène en s'affranchissant des étapes d'imprégnation (e1) et (e2).

La préparation du solide porteur d'oxygène selon l'invention peut comprendre le recyclage, à l'étape (E)(kkk), de fines du porteur d'oxygène produites au cours de son utilisation dans un procédé d'oxydo-réduction en boucle chimique tel que le CLC, par exemple par addition lors de l'étape (kkk) dans la suspension préparée à l'étape (A) de moins de 10% poids de fines par rapport à la teneur en oxyde(s) totale de la suspension. Les fines recyclées ont généralement une taille inférieure à 40 $\mu$m. Une étape de broyage des fines peut être donc nécessaire pour atteindre une distribution en taille des particules fines comprise entre 0,1 $\mu$m et 20 $\mu$m, de préférence entre 0,5 $\mu$m et 5 $\mu$m, et de manière plus préférée comprise entre 1 $\mu$m et 3 $\mu$m.

**Etape (F)** : **mise en forme des particules issues de l'étape (E)** - **optionnel**

Si la mise en forme des grains à la forme et la granulométrie désirée n'a pas été effectuée à l'issu de l'étape (B), les particules issues de l'étape (E) peuvent être mises en forme au cours de cette étape (F) de manière à obtenir des particules du porteur d'oxygène ayant la forme et la granulométrie désirées, telle que décrites précédemment.

En particulier la mise en forme à cette étape peut être réalisée pour produire des particules ayant une granulométrie telle que plus de 90% des particules ont une taille comprise entre 50 $\mu$m et 600 $\mu$m, plus préférentiellement entre 80 $\mu$m et 400 $\mu$m, et encore plus préférentiellement entre 100 $\mu$m et 300 $\mu$m, et encore plus préférentiellement une granulométrie telle que plus de 95% des particules ont une taille comprise entre 100 $\mu$m et 300 $\mu$m.

Si une mise en oeuvre en lit fluidisé circulant est envisagée dans le procédé d'oxydo-réduction en boucle chimique utilisant le solide porteur d'oxygène, la mise en forme est effectuée de préférence de manière à obtenir une distribution en taille des particules telle que lesdites particules appartiennent à la classe A ou à la classe B de la classification de Geldart, et plus préférentiellement à la classe B.

La mise en forme peut être réalisée selon toutes les techniques connues de l'homme de l'art permettant d'obtenir des particules, telles le séchage par atomisation, la granulation humide ou à sec (« wet or dry granulation » en anglais), par exemple l'agglomération sur assiette granulatrice ou tambour granulateur, la lyophilisation (« freeze granulation » en anglais), ou par des techniques de coagulation de gouttes (« oil drop » en anglais), et de préférence selon une technique de séchage par atomisation, d'agglomération sur assiette granulatrice ou tambour granulateur qui permettent d'obtenir des particules de forme sphérique, en particulier selon la granulométrie spécifique mentionnée ci-dessus.

La mise en forme peut également être réalisée selon d'autre techniques telles que l'extrusion ou le compactage, connues de l'homme du métier, permettant par exemple d'obtenir des particules souvent de plus grande taille, par exemple non sphériques, qui peuvent être mises en oeuvre en lit fixe ou en lit mobile.

La mise en forme peut comprendre éventuellement une étape de tamisage et/ou de cyclonage, afin d'obtenir des agglomérés de la granulométrie souhaitée.

**Utilisation du solide porteur d'oxygène**

Le solide porteur d'oxygène est destiné à être utilisé dans un procédé d'oxydo-réduction en boucle chimique.

L'invention porte ainsi sur un procédé d'oxydo-réduction en boucle chimique utilisant le solide porteur d'oxygène tel que décrit, ou préparé selon le procédé de préparation tel que décrit.

Avantageusement le solide porteur d'oxygène décrit est utilisé dans un procédé CLC d'une charge hydrocarbonée, dans lequel le solide porteur d'oxygène est sous forme de particules et circule entre au moins une zone de réduction et une zone d'oxydation opérant toutes les deux en lit fluidisé.

La température dans la zone de réduction et dans la zone d'oxydation est comprise entre 600°C et 1200°C, de préférence comprise entre 750°C et 1100°C, et encore plus préférentiellement comprise entre 800°C et 1100°C.

La charge hydrocarbonée traitée peut être une charge hydrocarbonée solide, liquide ou gazeuse : combustibles gazeux (ex.: gaz naturel, syngas, biogaz), liquides (ex.: fuel, bitume, diesel, essences etc.), ou solides (ex.: charbon, coke, pet-coke, biomasse, sables bitumineux, etc.).

Le principe de fonctionnement du procédé CLC dans lequel est utilisé le solide porteur d'oxygène décrit est le suivant : un solide porteur d'oxygène réduit est mis au contact d'un flux d'air, ou tout autre gaz oxydant, dans une zone réactionnelle appelée réacteur air (ou réacteur d'oxydation). Il en résulte un flux d'air appauvri et un flux de particules du solide porteur d'oxygène ré-oxydées. Le flux de particules de porteur d'oxygène oxydé est transféré dans une zone de réduction appelée réacteur fuel (ou réacteur de réduction). Le flux de particules est mis au contact d'un combustible, typiquement une charge hydrocarbonée. Il en résulte un effluent de combustion et un flux de particules de porteur d'oxygène réduit. L'installation CLC peut comprendre divers équipements, pour l'échange de chaleur, la mise en pression, la séparation ou les éventuelles recirculations de matière autour des réacteurs air et fuel.

Dans la zone de réduction, la charge hydrocarbonée est mise en contact, de préférence à co-courant, avec le solide porteur d'oxygène sous forme de particules pour réaliser la combustion de ladite charge par réduction du porteur d'oxygène. Le porteur d'oxygène est réduit par l'intermédiaire de la charge hydrocarbonée, qui est corrélativement oxydée en $CO_2$ et $H_2O$, ou éventuellement en mélange $CO + H_2$ selon les proportions de porteur d'oxygène et de charge hydrocarbonée utilisées. La combustion de la charge au contact de la masse active est réalisée à une température généralement comprise entre 600°C et 1200°C, préférentiellement entre 600°C et 1100°C, et plus préférentiellement entre 800°C et 1100°C. Le temps de contact varie selon le type de charge combustible utilisée. Il varie typiquement entre 1 seconde et 10 minutes, par exemple de préférence entre 1 et 5 minutes pour une charge solide ou liquide, et par exemple de préférence de 1 à 20 secondes pour une charge gazeuse.

Un mélange comprenant les gaz issus de la combustion et les particules du solide porteur d'oxygène est évacué, typiquement au sommet de la zone de réduction. Des moyens de séparation de gaz/solide, tels qu'un cyclone, permettent de séparer les gaz de combustion des particules solides du porteur d'oxygène dans leur état le plus réduit. Ces dernières sont envoyées vers la zone d'oxydation pour être ré-oxydées, à une température généralement comprise entre 600°C et 1200°C, préférentiellement entre 600°C et 1100°C, et plus préférentiellement entre 800°C et 1100°C.

Dans le réacteur d'oxydation, le porteur d'oxygène est restauré à son état oxydé au contact de l'air, avant de retourner vers la zone de réduction, et après avoir été séparée de l'air appauvri en oxygène évacué au sommet de la zone d'oxydation.

Le solide porteur d'oxygène, passant alternativement de sa forme oxydée à sa forme réduite et inversement, décrit un cycle d'oxydo-réduction.

Le solide porteur d'oxygène décrit peut également être utilisé dans un autre procédé d'oxydo-réduction en boucle chimique tel qu'un procédé CLR ou un procédé CLOU.

La technologie utilisée dans le procédé d'oxydo-réduction en boucle chimique est de préférence celle du lit fluidisé circulant, mais ne se limite pas à cette technologie, et peut être élargie à d'autres technologies comme celle du lit fixe, mobile ou bouillonnant, ou encore de réacteur tournant.

## Exemples

L'intérêt des solides porteurs d'oxygène selon l'invention dans les procédés en boucle chimique, en particulier CLC, notamment la minimisation de la migration de la masse active au sein des particules au cours des cycles redox, est exposé à travers les exemples 1 à 6 ci-dessous.

L'exemple 2 porte sur un solide porteur d'oxygène non conforme à l'invention. Les exemples 3 à 6 portent sur des solides porteurs d'oxygène conformes à l'invention.

Lorsque qu'il est fait référence dans les exemples ci-dessous à des figures représentant des diffractogrammes des rayons X, l'abscisse A correspond à l'angle $2\theta$ (en degrés) et l'ordonnée Cps représente le nombre de coups lors de la mesure.

Les diagrammes de diffraction (diffractogrammes) sont obtenus par analyse radiocristallographique au moyen d'un diffractomètre en utilisant la méthode classique des poudres avec le rayonnement $K\alpha 1$ du cuivre ($\lambda = 1,5406\text{Å}$). A partir de la position des pics de diffraction représentée par l'angle $2\theta$, on calcule, par la relation de Bragg, les équidistances réticulaires $d_{hkl}$ caractéristiques de l'échantillon. L'erreur de mesure $\Delta(d_{hkl})$ sur $d_{hkl}$ est calculée grâce à la relation de Bragg en fonction de l'erreur absolue $\Delta(2\theta)$ affectée à la mesure de $2\theta$. Une erreur absolue $\Delta(2\theta)$ égale à + ou -0,02° est communément admise.

Les formules des spinelles données dans les exemples ci-dessous sont des formules théoriques calculées à partir des teneurs en MgO, CuO et $Al_2O_3$.

La distribution en taille des particules peut être exprimées ci-dessous avec les valeurs pour $D_{V10}$, $D_{v50}$, $D_{V90}$. Le diamètre $D_{V10}$ est défini comme étant le diamètre tel que, parmi l'ensemble des particules , toutes les particules de taille inférieure à ce diamètre constituent 10% du volume des particules. Le diamètre $D_{V90}$ est défini comme étant le diamètre tel que, parmi l'ensemble des particules, toutes les particules de taille inférieure à ce diamètre constituent 90% du volume des particules. Le diamètre $D_{v50}$ est défini comme étant le diamètre médian tel que, parmi l'ensemble des particules, toutes les particules de taille inférieure à ce diamètre constituent 50% du volume des particules.

La tailles des particules est déterminée par granulométrie laser (Malvern Mastersizer 3000®, de préférence en voie liquide, et en utilisant la théorie de Fraunhofer).

On entend par la surface spécifique d'une particule ( alumine ou porteur d'oxygène) la surface spécifique B.E.T. déterminée par adsorption d'azote conformément à la norme ASTM D 3663-78 établie à partir de la méthode BRUNAUER-EMMETT-TELLER décrite dans le périodique « The Journal of American Society », 60, 309, (1938).

Dans la présente demande, le terme «comprendre» est synonyme de (signifie la même chose que) « inclure » et « contenir », et est inclusif ou ouvert et n'exclut pas d'autres éléments non récités. Il est entendu que le terme « comprendre » inclut le terme exclusif et fermé « consister ».

**Exemple 1 : Test de vieillissement des solides porteurs d'oxygène en lit fluidisé batch**

Le vieillissement des solides porteurs d'oxygène en lit fluidisé comme décrit ci-dessous a été réalisé dans une unité (comme décrite dans H. Stainton et al., Fuel (2012) 101, 205-214) constituée d'un réacteur en quartz, d'un système automatisé d'alimentation du réacteur en gaz et d'un système d'analyse des gaz sortant du réacteur. Il s'agit d'un procédé en lit fluidisé dit « batch » en anglais.

Ce test de vieillissement approxime les conditions d'utilisation du solide porteur d'oxygène dans un procédé d'oxydo-réduction en boucle chimique, en particulier de combustion en boucle chimique d'oxydo-réduction.

La distribution des gaz ($CH_4$, $CO_2$, $N_2$, air) est assurée par des débitmètres massiques. Pour des raisons de sécurité, un balayage à l'azote est réalisé après chaque période de réduction et d'oxydation.

La hauteur du réacteur en quartz est de 30 cm, avec un diamètre de 4 cm dans sa partie basse (sur 24 cm de haut), et 7 de cm dans sa partie haute. Un fritté en quartz est disposé en bas du réacteur pour assurer la distribution des gaz et une bonne fluidisation des particules. Un autre fritté est placé dans la partie haute du réacteur pour éviter la perte de fines au cours de l'essai. Le réacteur est chauffé à l'aide d'un four électrique. Une partie du gaz sortant du réacteur est pompée vers les analyseurs de gaz, refroidie pour condenser l'essentiel de l'eau formée lors de la réduction puis séchée à l'aide de chlorure de Calcium. Les concentrations en gaz sont mesurées à l'aide d'analyseurs infrarouge non dispersifs pour CO, $CO_2$ et $CH_4$, d'un analyseur paramagnétique pour l'oxygène, et d'un détecteur TCD pour l'hydrogène.

Conditions de test standard : 100 grammes de particules sont introduits dans le réacteur quartz puis chauffés à 900°C sous flux d'air (60 Nl/h). Lorsque la température du lit est stabilisée à 900°C sous air, 250 cycles sont réalisés selon les étapes suivantes :

1- Balayage à l'azote (60 Nl/h)
2- Injection d'un mélange $CH_4$/$CO_2$ (30 Nl/h/30 Nl/h) (réduction des particules)
3- Balayage à l'azote (60 Nl/h)
4- Injection d'air (60 Nl/h) (oxydation des particules).

La conversion du solide porteur d'oxygène (quantité d'oxygène apportée par le solide porteur d'oxygène pour réaliser la conversion du méthane, exprimée en % poids du porteur d'oxygène oxydé) est calculée à partir des données de conversion des gaz, et le temps de réduction (étape 2 du cycle) est ajusté après le premier cycle pour que le solide porteur d'oxygène relâche environ 2% poids d'oxygène (par rapport à la masse oxydée de solide porteur d'oxygène introduite) à chaque cycle de réduction. Le temps d'oxydation (étape 4 du cycle) est suffisant pour réoxyder totalement les particules (15 min).

La distribution en taille des particules a été mesurée à l'aide d'un granulomètre Malvern, en utilisant la théorie de Fraunhofer.

Les mesures de porosimétrie au mercure ont été réalisées sur l'appareil Autopore IV commercialisé par Micromeritics, en considérant une tension de surface du mercure de 485 dyn/cm et un angle de contact de 140°. La taille de pores minimale mesurable par porosimétrie au mercure est de 3,65 nm.

Les isothermes d'adsorption d'azote ont été réalisés sur l'appareil ASAP 2420 commercialisé par Micromeritics.

**Exemple 2 : solide porteur contenant CuO (13% poids) / $MgAl_2O_4$ stoechiométrique (87%poids), Y = 24,6% poids (non conforme)**

Selon cet exemple2, on forme un solide porteur d'oxygène par ajout de 13% en poids de CuO sur un spinelle stoechiométrique $MgAl_2O_4$.

Les teneurs en CuO, MgO et $Al_2O_3$ sont telles lors de la préparation qu'un spinelle stoechiométrique est formé.

Dans cet exemple 2, les particules du solide porteur d'oxygène sont préparées par imprégnation à sec de nitrate de cuivre sur un spinelle stoechiométrique $MgAl_2O_4$. Le spinelle stoechiométrique est préparé par deux imprégnations à sec successives de nitrate de magnésium sur des particules d'alumine. L'alumine utilisée pour cet exemple est une poudre obtenue à partir d'une suspension aqueuse d'alumine au moyen du procédé de séchage par atomisation, tel que décrit ci-dessus dans la partie description détaillée de préparation du solide porteur d'oxygène. Elle a été préparée de la manière suivante :

Une suspension aqueuse composée de 75% poids d'eau dé-ionisée, de 15,8% poids de grains d'alumine gamma, de 4,01% poids de grains de boehmite, de 3,23°/ poids de liant alcool polyvinylique (PVA avec M~4000 g/mol, humidité de 80% poids), et de 1,96°/ poids d'acide nitrique ($HNO_3$ concentré à 68°/pds) est pompée vers un séchoir par atomisation, où elle est pulvérisée en fines gouttelettes qui, durant la phase de séchage et d'évaporation de l'eau, vont former des particules solides sphériques avec une taille proche de la centaine de $\mu$m.

La distribution en taille des particules de l'alumine gamma utilisée indique $D_{v10}$ = 1,0 $\mu$m, $D_{v50}$ = 2,8 $\mu$m et $D_{v90}$ = 6,6 $\mu$m. La distribution en taille des pores est comprise entre 0 et 20 nm, centrée sur 9 nm, et la surface spécifique mesurée par physisorption d'azote selon la méthode B.E.T. est de 206 m$^2$/g.

La distribution en taille des particules de la boehmite utilisée indique $D_{v10}$ = 13,6 $\mu$m, $D_{v5}$0 = 74,5 $\mu$m et $D_{v90}$ = 166 $\mu$m.

Les particules sèches obtenues forment une poudre, qui est ensuite calcinée (étape (C)) durant 4 heures en four à moufles à une température de 700°C, puis qui est criblée (étape (D)) entre 125 $\mu$m et 315 $\mu$m pour éliminer les plus fines particules.

La distribution en taille des particules (support alumine) à l'issue de l'étape de criblage est caractérisée par les paramètres suivants : $D_{v10}$ = 100 $\mu$m, $D_{v50}$ = 159 $\mu$m et $D_{v90}$ = 246 $\mu$m. Le volume poreux mesuré par porosimétrie au mercure desdites particules (support alumine) est de 0,636 ml/g, et une distribution en taille des pores bimodale est observée. La distribution en taille des pores pour la mésoporosité est comprise entre 6 et 50 nm (centrée sur 10,8 nm) et pour la macroporosité est comprise entre 50 et 500 nm (centrée sur 290 nm). Le volume macroporeux est de 0,25 ml/g, soit 39% du volume poreux total mesuré par porosimétrie au mercure.

200 g de particules d'alumine ainsi obtenues sont imprégnées à sec une première fois par 190ml d'une solution à 700 g/l de nitrate de magnésium (Mg(NO$_3$)$_2$), puis séchées à 120°C pendant 12 heures, puis calcinées à 600°C pendant 4 heures. Une seconde imprégnation à sec de ces particules avec la même solution est ensuite réalisée, suivie d'un séchage à 120°C et d'une calcination à 800°C pendant 4h. La composition théorique de ces particules est proche de celle de MgAl$_2$O$_4$ stoechiométrique.

Une ultime étape d'imprégnation à sec par 117 ml d'une solution à 528 g/l de nitrate de cuivre (Cu(NO$_3$)$_2$), suivie d'un séchage à 120°C pendant 12h, puis d'une calcination à 800°C pendant 4h permet d'obtenir des particules contenant environ 13% en poids de CuO et environ 87% en poids de MgAl$_2$O$_4$. L'analyse DRX (FIG.2A) montre que les particules sont bien constituées de CuO (ténorite), de MgAl$_2$O$_4$ et/ou CuAl$_2$O$_4$ (les pics de diffraction sont quasiment superposés pour ces deux spinelles) et les pics caractéristiques de MgO sont également détectés, indiquant qu'une partie du magnésium dans le spinelle a pu être échangé par du cuivre. Un forte proportion de cuivre se trouve néanmoins sous forme CuO d'après les intensités relatives des pics de diffraction. Dans le diffractogramme des rayons X de la FIG.2A, l'abscisse A correspond à l'angle 2$\theta$ (en degrés) et l'ordonnée Cps représente le nombre de coups lors de la mesure.

Le volume poreux des particules du solide obtenu, mesuré par porosimétrie au mercure, est de 0,330 ml/g, dont 0,161 ml/g (soit 48,8% du volume poreux total mesuré par porosimétrie au mercure) est dû à la macroporosité. La distribution de la taille des mésopores est comprise entre 4 et 50 nm et centrée sur 12,55 nm, tel que visible sur le diagramme de la figure 2B représentant le volume de mercure injecté Vi (ml/g) dans la porosité en fonction du diamètre des pores (nm), ainsi que le rapport dV/dD (dérivée du (volume Hg introduit / taille des pores), donnant une information sur la distribution en taille des pores pour le solide porteur d'oxygène selon cet exemple. La distribution de la taille des macropores est supérieure à 50 nm et inférieure ou égale à 2,8 $\mu$m et centrée sur 127 nm, tel que visible sur le diagramme de la figure 2B. Les particules sont donc à la fois mésoporeuses et macroporeuses.

L'isotherme d'adsorption d'azote du solide porteur d'oxygène selon cet exemple permet de mesurer une surface spécifique de 60 m$^2$/g, un volume microporeux (pores <2nm) nul et un volume mésoporeux (2nm < pores et < ou = 50 nm) de 0,223 ml/g.

Le solide porteur d'oxygène selon cet exemple a été vieilli dans les conditions décrites dans l'exemple 1.

La FIG.2C est un diagramme représentant le taux de conversion normalisé Xc du méthane en fonction du nombre N de cycles d'oxydo-réduction dans un procédé CLC utilisant le solide porteur d'oxygène selon l'exemple 2. La conversion du méthane est de 100 % au début du test, et elle diminue progressivement pour atteindre environ 91 % après 250 cycles.

La FIG.2D illustre la distribution de la taille des particules du solide porteur d'oxygène selon l'exemple 2 avant (courbe en pointillé B) et après (courbe pleine A) son utilisation dans un procédé CLC. Le volume V (en °/) est donné en ordonnée et la taille S des particules (en $\mu$m) est donnée en abscisse. La comparaison des distributions de taille des particules du solide porteur d'oxygène avant et après son utilisation dans un procédé CLC montre qu'une proportion importante de particules fines est apparue au cours du test, et que de larges agglomérats se sont formés.

Une analyse DRX des particules du porteur après test (non représenté dans les figures) indique que seules les phases de MgAl$_2$O$_4$ et/ou CuAl$_2$O$_4$ (très bien cristallisé) et CuO sont présentes dans le solide porteur d'oxygène.

Les clichés MEB (microscopie électronique à balayage) sur section polie en électrons rétrodiffusés des particules après test, visibles à la FIG.2E (2 clichés du haut à grossissement x250 et 2 clichés en bas à grossissement x 1000), montrent que le cuivre (blanc brillant) est majoritairement situé à la périphérie des particules et dans les larges fissures qui sont apparues au cours des cycles d'oxydo-réduction. Le cuivre est également présent en grande quantité dans la phase qui sert de liant entre les particules formant les agglomérats détectés par granulométrie laser. De nombreux fragments de particules de porteur d'oxygène sont également observées au sein de l'échantillon, conformément à l'analyse granulométrique.

L'exemple 2 montre qu'un porteur d'oxygène constitué à 13% de CuO et à 87% d'une matrice céramique spinelle stoechiométrique $MgAl_2O_4$ ne présente pas une durée de vie suffisante dans un procédé de combustion en boucle chimique.

**Exemple 3 : solide porteur contenant CuO (13% poids) / $Mg_{0,48}Al_{2,34}O_4$ sous-stoechiométrique (87% poids), Y = 12,2% poids, calciné à 800°C (conforme)**

Selon cet exemple 3, on forme un solide porteur d'oxygène par ajout de 13% en poids de CuO sur un spinelle sous-stoechiométrique $Mg_{0,48}Al_{2,34}O_4$.

Le porteur d'oxygène est préparé par une imprégnation de nitrate de magnésium puis une imprégnation de nitrate de cuivre sur les mêmes particules d'alumine macroporeuses que dans l'exemple 2.

200g de particules d'alumine issues du même lot que celui préparé pour l'exemple 2 sont imprégnées à sec par 180 ml d'une solution à 610 g/l de nitrate de magnésium ($Mg(NO_3)_2$), séchées à 120°C pendant 12 heures puis calcinées à 800°C pendant 4 heures. Les particules obtenues sont toujours sphériques, et sont composées majoritairement d'un spinelle sous-stoechiométrique de composition théorique $Mg_{0,48}Al_{2,34}O_4$.

Une étape d'imprégnation à sec par 178 ml d'une solution à 375 g/l de nitrate de cuivre ($Cu(NO_3)_2$, suivie d'un séchage à 120°C pendant 12h puis d'une calcination à 800°C pendant 4h permet d'obtenir des particules contenant environ 13% en poids de CuO et environ 87% en poids de $Mg_{0,48}Al_{2,34}O_4$.

L'analyse DRX montre (FIG.3A) que les particules sont bien constituées de CuO, ainsi que d'un spinelle de type $MgAl_2O_4$ et/ou $CuAl_2O_4$ sous-stoechiométrique en Mg et/ou Cu. En effet, parmi les pics de diffraction typiques de la structure spinelle, le pic « $P_3$ » du plan 440 de l'échantillon (à A=65,7 °2θ) se situe entre celui de l'alumine gamma (à A=67,03 °2θ) et celui de $CuAl_2O_4$ (à A=65,29 °2θ) et de $MgAl_2O_4$ (à A=65,23 °2θ), ce qui signifie qu'une partie des sites tétraédriques et octaédriques disponibles dans la structure spinelle ne sont pas remplis. Il est remarquable que du fait de rayons cationiques similaires (72 pm pour $Mg^{2+}$, 73 pm pour $Cu^{2+}$), les spinelles $CuAl_2O_4$ et $MgAl_2O_4$ présentent des diffractogrammes des rayons X quasiment superposables, rendant difficile la distinction entre les deux structures.

Le volume poreux mesuré par porosimétrie au mercure du support en alumine est de 0,505 ml/g, et une distribution en taille des pores bimodale est observée. La distribution en taille des pores pour la mésoporosité est comprise entre 5 et 50 nm (centrée sur 12 nm) et pour la macroporosité est supérieure à 50 nm et inférieure ou égale à 500 nm (centrée sur 300 nm). Le volume macroporeux est de 0,237 ml/g, soit 47% du volume poreux total mesuré par porosimétrie au mercure.

Le solide porteur d'oxygène selon cet exemple a été vieilli dans les conditions décrites dans l'exemple 1.

La FIG.3B est un diagramme représentant le taux de conversion normalisé Xc du méthane en fonction du nombre N de cycles d'oxydo-réduction dans un procédé CLC utilisant le solide porteur d'oxygène selon l'exemple 3. La conversion du méthane est d'environ 100 % dès le début du test, et elle reste stable durant les 250 cycles que dure le test.

La présence d'oxygène lors de l'étape de balayage à l'azote après oxydation est observée. Les particules peuvent donc être utilisées indifféremment dans un procédé de type CLC ou CLOU.

La FIG.3C illustre la distribution de la taille des particules du solide porteur d'oxygène selon l'exemple 3 avant (courbe en grands pointillés C) et après (courbe petits pointillés D) son utilisation dans un procédé CLC. Le volume V (en °/) est donné en ordonnée et la taille S des particules (en μm) est donnée en abscisse. La comparaison des distributions de tailles des particules du solide porteur d'oxygène avant et après son utilisation dans un procédé CLC montre que les distributions en taille des particules avant et après test sont quasiment identiques.

Les clichés MEB en section polie des particules après test, visibles à la FIG.3D (cliché de gauche à grossissement x250 et cliché de droite x2500), montrent l'absence de nodules de CuO au sein des particules. Contrairement aux particules selon le brevet FR3061036, le cuivre n'a pas formé de nodules d'oxyde de cuivre au sein de la porosité des particules, et la distribution du cuivre dans les particules est sensiblement améliorée, malgré une légère surconcentration à la périphérie des particules.

**Exemple 4 : solide porteur contenant CuO (13% poids)/ $Mg_{0,239}Al_{2,507}O_4$ sous-stoechiométrique (87% poids), Y = 6,09% poids, calciné à 900°C (conforme), formant un spinelle $Cu_{0,243}Mg_{0,224}Al_{2,355}O_4$ sous-stoechiométrique**

Selon cet exemple 4, on forme un solide porteur d'oxygène par imprégnations successives de $Mg(NO_3)_2$ et $Cu(NO_3)_2$ sur des particules d'alumine de taille comprise entre 100 μm et 300 μm obtenues par atomisation d'une suspension aqueuse d'alumine au moyen du procédé de séchage par atomisation, tel que décrit ci-dessus dans la partie description détaillée de préparation du solide porteur d'oxygène. La suspension d'alumine a été préparée de la manière suivante :

Une suspension aqueuse composée de 69,8% poids d'eau dé-ionisée, de 26,1% poids de grains d'alumine gamma, de 3,9% poids de grains de boehmite et de 0,2% poids d'acide nitrique ($HNO_3$ concentré à 68°/pds) est préparée (étape A) puis est pompée vers un séchoir par atomisation, où elle est pulvérisée en fines gouttelettes qui, durant la phase de séchage et d'évaporation de l'eau, vont former des particules solides sphériques de taille supérieure à la centaine de $\mu$m (étape B).

La distribution en taille des particules de l'alumine gamma utilisée dans la préparation de la suspension aqueuse indique $D_{v10}$ = 1,56 $\mu$m, $D_{v50}$ = 3,73 $\mu$m et $D_{v90}$ = 7,47 $\mu$m. La surface spécifique mesurée par physisorption d'azote selon la méthode B.E.T. est de 291 $m^2$/g.

La distribution en taille des particules de la boehmite utilisée indique $D_{v10}$ = 13,6 $\mu$m, $D_{v50}$ = 74,5 $\mu$m et $D_{v90}$ = 166 $\mu$m.

Les particules sèches obtenues forment une poudre, qui est ensuite calcinée (étape (C)) durant 4 heures en four à moufles à une température de 700°C pendant 4h, puis qui est criblée (étape (D)) entre 125 $\mu$m et 315 $\mu$m pour éliminer les plus fines particules.

La distribution en taille des particules (support alumine) à l'issue de l'étape de criblage est caractérisée par les paramètres suivants : $D_{v10}$ = 118 $\mu$m, $D_{v50}$ = 182 $\mu$m et $D_{v90}$ = 268 $\mu$m. Le volume poreux mesuré par porosimétrie au mercure desdites particules (support alumine) est de 0,893 ml/g, et une distribution en taille des pores bimodale est observée. La distribution en taille des pores pour la mésoporosité est comprise entre 4 et 50 nm (centrée sur 8,85 nm) et pour la macroporosité est supérieure à 50 nm et inférieure ou égale à 1200 nm (centrée sur 640 nm). Le volume macroporeux est de 0,562 ml/g, soit 62,9% du volume poreux total mesuré par porosimétrie au mercure.

Les particules d'alumine sont ensuite imprégnées à sec par une solution de nitrate de magnésium, séchées, à 120°C pendant 12 heures, et calcinées à 800°C pendant 4h (étape e1). La quantité de nitrate de magnésium utilisé pour l'imprégnation à sec est calculée afin d'obtenir un spinelle sous-stoechiométrique $Mg_{0,239}Al_{2,507}O_4$ à l'issue de l'étape (e1), soit une teneur de 7% en MgO exprimée en % poids du spinelle $Mg_{0,239}Al_{2,508}O_4$. Ainsi, 200 g de particules d'alumine sont imprégnées à sec par 180 ml d'une solution à 640 g/l de nitrate de magnésium ($Mg(NO_3)_2$).

Les particules du spinelle sous-stoechiométrique $Mg_{0,239}Al_{2,508}O_4$ sont ensuite imprégnées à sec par une solution de nitrate de cuivre, séchées à 120°C pendant 12h, et calcinées à 900°C pendant 12h (étape e2). La quantité de nitrate de cuivre utilisé pour l'imprégnation à sec est calculée afin d'obtenir un spinelle sous-stoechiométrique $Cu_{0,243}Mg_{0,224}Al_{2,355}O_4$, soit des teneurs de 13% en poids de CuO et 6,09% en poids de MgO exprimées en pourcentage poids du porteur d'oxygène. Ainsi, particules du spinelle sous-stoechiométrique $Mg_{0,239}Al_{2,508}O_4$ sont imprégnées avec 117 ml d'une solution à 528 g/l de nitrate de cuivre ($Cu(NO_3)_2$).

L'analyse DRX, visible à la FIG.4A, montre que les particules sont constituées essentiellement d'un spinelle sous-stoechiométrique en Cu et Mg, ainsi que de traces d'oxyde de cuivre et d'alumine alpha. Le pic de diffraction « $P_4$ » du plan 440 du spinelle (à A=65,7°2θ) se situe entre ceux de l'alumine gamma et des spinelles $CuAl_2O_4$ et $MgAl_2O_4$, confirmant l'aspect sous-stoechiométrique dudit spinelle formé. La faible intensité des pics de l'alumine alpha et du CuO permettent de conclure qu'un spinelle sous-stoechiométrique de formule proche de $Cu_{0,24}Mg_{0,22}Al_{2,35}O_4$ est obtenu.

La distribution en taille des particules du solide porteur d'oxygène indique $D_{v10}$ = 128 $\mu$m, $D_{v50}$ = 190 $\mu$m et $D_{v90}$ = 273 $\mu$m. Le volume poreux mesuré par porosimétrie au mercure du support en alumine est de 0,685 ml/g, et une distribution en taille des pores bimodale est observée. La distribution en taille des pores pour la mésoporosité est comprise entre 5 nm et 50 nm (centrée sur 14,8 nm) et pour la macroporosité est supérieure à 50 nm et inférieure ou égale à 960 nm (centrée sur 600 nm). Le volume macroporeux est de 0,442 ml/g, soit 64,5% du volume poreux total mesuré par porosimétrie au mercure.

Le solide porteur d'oxygène selon cet exemple a été vieilli dans les conditions décrites dans l'exemple 1.

La FIG.4B est un diagramme représentant le taux de conversion normalisé Xc du méthane en fonction du nombre N de cycles d'oxydo-réduction dans un procédé CLC utilisant le solide porteur d'oxygène selon l'exemple 5. La conversion du méthane est d'environ 100 % au début du test, et elle diminue très légèrement pour atteindre environ 99,3 % après 250 cycles.

La présence d'oxygène lors de l'étape de balayage à l'azote est observée. Les particules peuvent donc être utilisées indifféremment dans un procédé de type CLC ou CLOU.

La FIG.4C permet de comparer les distributions de tailles des particules du solide porteur d'oxygène avant (courbe en noir E) et après (courbe en gris F) son utilisation dans un procédé CLC : les distributions en taille des particules avant et après test sont quasiment identiques. Le formation d'une faible quantité de particules fines est néanmoins observée.

Les clichés MEB sur section polie en électrons rétrodiffusés des particules après test, visibles à la FIG.4D (1 cliché à gauche à grossissement x250 et 1 cliché à droite à grossissement x1000), montrent que, contrairement aux particules selon le brevet FR3061036, le cuivre n'a pas formé de nodules d'oxyde de cuivre au sein de la porosité des particules, et la distribution du cuivre dans les particules est particulièrement améliorée, avec une légère surconcentration à la périphérie de quelques particules.

Cet exemple 4 montre qu'après vieillissement du porteur d'oxygène comportant initialement un spinelle sous-stoechiométrique de formule proche de $Cu_{0,24}Mg_{0,22}Al_{2,35}O_4$, le cuivre est uniformément réparti au sein des particules du solide porteur d'oxygène. Le cuivre n'a pas formé de nodules d'oxyde de cuivre au sein de la porosité des particules, et la distribution du cuivre dans les particules est sensiblement améliorée, malgré une légère surconcentration à la périphérie des particules.

**Exemple 5 : solide porteur contenant CuO (13% poids) / $Mg_{0,483}Al_{2,345}O_4$ sous-stoechiométrique (87%poids), Y = 12,18% poids, calciné à 900°C, formant un spinelle $Cu_{0,245}Mg_{0,453}Al_{2,201}O_4$ sous-stoechiométrique (conforme)**

Selon cet exemple 5, on forme un solide porteur d'oxygène par imprégnations successives de $Mg(NO_3)_2$ et $Cu(NO_3)_2$ sur les mêmes particules d'alumine que celles utilisées dans l'exemple 4.

Les particules d'alumine sont imprégnées à sec par une solution de nitrate de magnésium, séchées à 120°C pendant 12 heures, et calcinées à 800°C pendant 4h (étape e1). La quantité de nitrate de magnésium utilisée pour l'imprégnation à sec est calculée afin d'obtenir un spinelle sous-stoechiométrique $Mg_{0,483}Al_{2,345}O_4$ à l'issue de l'étape (e1), soit une teneur de 14% en MgO exprimée en % poids du spinelle $Mg_{0,483}Al_{2,345}O_4$.

Les particules du spinelle sous-stoechiométrique $Mg_{0,483}Al_{2,345}O_4$ sont ensuite imprégnées à sec par une solution de nitrate de cuivre, séchées à 120°C pendant 12 heures, et calcinées à 900°C pendant 12h (étape e2). La quantité de nitrate de cuivre utilisée pour l'imprégnation à sec est calculée afin d'obtenir un spinelle sous-stoechiométrique $Cu_{0,245}Mg_{0,453}Al_{2,201}O_4$, soit des teneur de 13% en poids de CuO et 12,18% en poids de MgO exprimées en % poids du solide porteur d'oxygène.

L'analyse DRX, visible à la FIG.5A, montre que les particules sont constituées essentiellement d'un spinelle sous-stoechiométrique en Cu et Mg, ainsi que de traces d'oxyde de cuivre. Le pic de diffraction « $P_5$ » du plan 440 du spinelle (à A=65,5° 2θ) se situe entre ceux de l'alumine gamma et des spinelles $CuAl_2O_4$ et $MgAl_2O_4$, confirmant l'aspect sous-stoechiométrique dudit spinelle formé. La faible intensité des pics du CuO permet de conclure qu'un spinelle sous-stoechiométrique de formule proche de $Cu_{0,24}Mg_{0,45}Al_{2,20}O_4$ est obtenu.

La distribution en taille des particules du solide porteur d'oxygène indique $D_{v10}$ = 132 μm, $D_{v50}$ = 192 μm et $D_{v90}$ = 272 μm. Le volume poreux mesuré par porosimétrie au mercure du support en alumine est de 0,646 ml/g, et une distribution en taille des pores bimodale est observée. La distribution en taille des pores pour la mésoporosité est comprise entre 5 nm et 50 nm (centrée sur 14,6 nm) et pour la macroporosité est supérieure à 50 nm et inférieure ou égale à 860 nm (centrée sur 600 nm). Le volume macroporeux est de 0,411 ml/g, soit 63,6% du volume poreux total mesuré par porosimétrie au mercure.

Le solide porteur d'oxygène selon cet exemple a été vieilli dans les conditions décrites dans l'exemple 1.

La FIG.5B est un diagramme représentant le taux de conversion normalisé Xc du méthane en fonction du nombre N de cycles d'oxydo-réduction dans un procédé CLC utilisant le solide porteur d'oxygène selon l'exemple 5. La conversion du méthane est d'environ 100 % au début du test, et elle diminue très légèrement pour atteindre environ 99,8 % après 250 cycles.

La présence d'oxygène lors de l'étape de balayage à l'azote est observée. Les particules peuvent donc être utilisées indifféremment dans un procédé de type CLC ou CLOU. Comme dans l'exemple 4, une faible quantité de fines a été formée au cours du test.

Les clichés MEB en section polie des particules après test, visibles à la FIG.5C (1 cliché à gauche à grossissement x250 et 1 cliché à droite à grossissement x1000), montrent que contrairement aux particules selon le brevet FR3061036, le cuivre n'a pas formé de nodules d'oxyde de cuivre au sein de la porosité des particules, et la distribution du cuivre dans les particules est particulièrement améliorée, avec une légère surconcentration à la périphérie de quelques particules.

**Exemple 6 : solide porteur contenant CuO (11,15% poids) et 3,52% poids de MgO contenus dans un spinelle $Cu_{0,205}Mg_{0,128}Al_{2,445}O_4$ sous stoechiométrique - calcination à 900°C (conforme)**

Selon cet exemple 6, on forme un solide porteur d'oxygène par selon la méthode décrite mettant en oeuvre l'étape (e3) (kk), en incorporant Mg et Cu lors de la préparation des particules par atomisation.

Une suspension aqueuse composée de 42,6% poids d'eau dé-ionisée, de 20,2% poids de grains d'alumine gamma, de 17,0 % poids de nitrate de cuivre ($CuNO_3$ concentré à 43,69 % poids), de 17,0 % poids de nitrate de magnésium ($MgNO_3$ concentré à 17,25 % poids), de 3,1% poids de grains de boehmite, et de 0,1% poids d'acide nitrique ($HNO_3$ concentré à 68 % poids) est pompée vers un séchoir par atomisation, où elle est pulvérisée en fines gouttelettes qui, durant la phase de séchage et d'évaporation de l'eau, vont former des particules solides sphériques avec une taille proche de la centaine de μm.

La distribution en taille des particules de l'alumine gamma utilisée (la même que dans l'exemple 5) indique $D_{v10}$ = 1,56 μm, $D_{v50}$ = 3,73 μm et $D_{v90}$ = 7,47 μm. La distribution en taille des particules de la boehmite utilisée indique $D_{v10}$ = 13,6 μm, $D_{v50}$= 74,5 μm et $D_{v90}$ = 166 μm.

Les particules séchées sont ensuite calcinées à 900°C pendant 12h.

L'analyse DRX, visible à la FIG.6A, montre que les particules sont constituées essentiellement d'un spinelle sous-stoechiométrique en Cu et Mg, ainsi que de traces d'alumine alpha. Le pic de diffraction « $P_6$ » du plan 440 du spinelle (à A=66,2° 2θ) se situe entre ceux de l'alumine gamma et des spinelles $CuAl_2O_4$ et $MgAl_2O_4$, confirmant l'aspect sous-stoechiométrique dudit spinelle formé. La faible intensité des pics de l'alumine alpha permet de conclure qu'un spinelle sous-stoechiométrique de formule proche de $Cu_{0,21}Mg_{0,12}Al_{2,45}O_4$ est obtenu.

La distribution en taille des particules du solide porteur d'oxygène indique $D_{v10}$ = 69 μm, $D_{v50}$ = 122 μm et $D_{v90}$ = 199 μm. Le volume poreux mesuré par porosimétrie au mercure du support en alumine est de 0,660 ml/g, et une distribution en taille des pores bimodale est observée. La distribution en taille des pores pour la mésoporosité est comprise entre 6 nm et 50 nm (centrée sur 10,8 nm) et pour la macroporosité est supérieure à 50 nm et inférieure ou égale à 1500 nm (centrée sur 660 nm). Le volume macroporeux est de 0,511 ml/g, soit 77,4% du volume poreux total mesuré par porosimétrie au mercure.

Le solide porteur d'oxygène selon cet exemple a été vieilli dans les conditions décrites dans l'exemple 1.

La FIG.6B est un diagramme représentant le taux de conversion normalisé Xc du méthane en fonction du nombre N de cycles d'oxydo-réduction dans un procédé CLC utilisant le solide porteur d'oxygène selon l'exemple 6. La conversion du méthane est d'environ 100 % au début du test, et elle diminue très légèrement pour atteindre environ 97,9 % après 250 cycles

La présence d'oxygène lors de l'étape de balayage à l'azote est observée. Les particules peuvent donc être utilisées indifféremment dans un procédé de type CLC ou CLOU.

Comme dans les exemples 4 et 5, une faible quantité de fines a été formée au cours du test. Les clichés MEB en section polie des particules après test, visibles à la FIG.6C (1 cliché à gauche à grossissement x250 et 1 cliché à droite à grossissement x1000), montrent que contrairement aux particules selon le brevet FR3061036, le cuivre n'a pas formé de nodules d'oxyde de cuivre au sein de la porosité des particules, et la distribution du cuivre dans les particules est encore meilleure que dans les exemples 4 et 5, ne présentant pas de surconcentration à la périphérie des particules.

## Revendications

1. Solide porteur d'oxygène sous forme de particules pour un procédé d'oxydo-réduction en boucle chimique tel que la combustion en boucle chimique, comportant:

   - du cuivre à une teneur totale X comprise entre 5% et 39% exprimée en poids d'oxyde de cuivre par rapport au poids total du solide porteur d'oxygène sous sa forme oxydée ;
   - une matrice en céramique au sein de laquelle est dispersé ledit cuivre, ladite matrice en céramique comportant :

     -- un premier spinelle sous-stoechiométrique de formule $Mg_aAl_bO_4$, et/ou
     -- un deuxième spinelle sous-stoechiométrique de formule $Cu_cMg_dAl_eO_4$,

   avec :

$$a = \frac{4}{\left(1 + \left(3 \times \left(\frac{(100-X)}{Y} - 1\right) \times \frac{M_{MgO}}{M_{Al2O3}}\right)\right)}$$

$$b = \frac{8 \times (100 - X - Y)}{\left(Y \times \frac{M_{Al2O3}}{M_{MgO}} + 3 \times (100 - X - Y)\right)}$$

$$c = \frac{4X}{M_{CuO} \times \left(\frac{X}{M_{CuO}} + \frac{Y}{M_{MgO}} + 3 \times \frac{100 - X - Y}{M_{Al2O3}}\right)}$$

$$d = \frac{4Y}{M_{MgO} * (\frac{X}{M_{CuO}} + \frac{Y}{M_{MgO}} + 3 \times \frac{100 - X - Y}{M_{Al2O3}})}$$

$$e = \frac{8 \times (100 - X - Y)}{M_{Al2O3} \times (\frac{X}{M_{CuO}} + \frac{Y}{M_{MgO}} + 3 \times \frac{100 - X - Y}{M_{Al2O3}})}$$

$M_{MgO}$, $M_{CuO}$, $M_{Al2O3}$ étant les masses molaires respectives de MgO, CuO et $Al_2O_3$,
Y étant la quantité de MgO en pourcentage poids du solide porteur d'oxygène,
Avec X compris entre 5% et 39%, Y compris entre 1% et 23%, et Y < -0,6342X + 26,223.

2. Solide selon la revendication 1, dans lequel la matrice comprend le premier spinelle ou le deuxième spinelle.

3. Solide selon l'une des revendications précédentes, dans lequel la matrice est sensiblement constituée par le deuxième spinelle.

4. Solide selon l'une des revendications précédentes, dans lequel les particules ont une forme sensiblement sphérique, et une granulométrie telle que plus de 90% des particules ont une taille comprise entre 50 $\mu$m et 600 $\mu$m, de préférence comprise entre 80 $\mu$m et 400 $\mu$m, et plus préférentiellement comprise entre 100 $\mu$m et 300 $\mu$m.

5. Solide selon l'une des revendications précédentes, comportant en outre:

   - un volume poreux total du solide porteur d'oxygène Vtot, mesuré par porosimétrie au mercure, compris entre 0,05 et 1,2 ml/g ;
   - un volume poreux des macropores constituant au moins 10% de Vtot ;
   - une distribution en taille des macropores au sein du solide porteur d'oxygène, mesurée par porosimétrie au mercure, supérieure à 50 nm et inférieure ou égale à 7 $\mu$m.

6. Procédé de préparation d'un solide porteur d'oxygène selon l'une des revendications 1 à 5, comportant les étapes suivantes :

   (A) la préparation d'une suspension aqueuse comportant des particules d'alumines et un liant aluminique, ledit liant aluminique étant de préférence de la boehmite et/ou des hydroxydes d'aluminium, lesdites particules d'alumine formant des grains de taille comprise entre 0,1 $\mu$m et 20 $\mu$m;
   (B) le séchage par atomisation de la suspension obtenue à l'étape (A) pour former des particules, ledit séchage par atomisation comportant la pulvérisation de la suspension dans une chambre de séchage à l'aide de moyens de pulvérisation pour former des gouttelettes, et la mise en contact simultanée desdites gouttelettes avec un gaz vecteur chaud, de préférence de l'air ou de l'azote, porté à une température comprise entre 180°C et 350°C ;
   (C) la calcination des particules issues du séchage par atomisation à l'étape (B), ladite calcination étant effectuée sous air et à une température comprise entre 400°C et 1400°C ;
   (D) le criblage optionnel des particules calcinées issues de l'étape (C), de préférence par séparation au moyen d'un cyclone ;
   (E) l'intégration de Cu et de Mg selon l'enchainement des étapes (e1) et (e2), ou selon l'étape (e3), ou selon les étapes (e3) et (e2) pour produire le solide porteur d'oxygène sous forme de particules :

   (e1) (i) l'imprégnation des particules calcinées issues de l'étape (C) ou optionnellement criblées issues de l'étape (D), par une solution aqueuse ou organique contenant au moins un composé précurseur soluble du Mg, puis (ii) le séchage desdites particules imprégnées issues de (i) à une température comprise entre 30°C et 200°C suivi (iii) d'une calcination à une température comprise entre 700°C et 1400°C de préférence sous air ;
   (e2) (j) l'imprégnation des particules calcinées issues de l'étape (e1) ou des particules calcinées issues de l'étape (C) ou optionnellement des particules criblées issues de l'étape (D), par une solution aqueuse ou organique contenant au moins un composé précurseur soluble du Cu, puis (jj) le séchage desdites particules imprégnées issues de (j) à une température comprise entre 30°C et 200°C suivi (jjj) d'une calcination à une température comprise entre 700°C et 1400°C de préférence sous air ;

**(e3)** l'incorporation d'un précurseur de Mg et éventuellement d'un précurseur de Cu avant l'étape (B) selon l'une des sous étapes (k), (kk) ou (kkk) suivantes :

(k) avant l'étape (A), l'imprégnation des particules d'alumine utilisées pour préparer la suspension à l'étape (A) par une solution aqueuse ou organique contenant au moins un composé précurseur de Mg, et éventuellement un composé précurseur de Cu, optionnellement suivie du séchage des particules d'alumine imprégnées à une température comprise entre 30°C et 200°C et d'une calcination à une température comprise entre 700°C et 1400°C, de préférence sous air, des particules d'alumine séchées ;

(kk) après l'étape (A) et avant l'étape (B), l'addition d'au moins un précurseur soluble du Mg, et éventuellement d'un précurseur soluble du Cu, à la suspension issue de l'étape (A) ;

(kkk) après l'étape (A) et avant l'étape (B), l'addition à la suspension issue de l'étape (A) d'au moins un oxyde de Mg, et éventuellement d'un oxyde de Cu, le ou lesdits oxydes étant sous la forme de grains de taille comprise entre 0,1 μm et 20 μm;

étant entendu que l'étape (e2) est nécessairement réalisée en combinaison avec l'étape (e3) si aucun composé précurseur de Cu ou composé précurseur soluble du Cu ou oxyde de Cu n'est ajouté lors des sous-étapes (k), (kk) et (kkk) à l'étape (e3).

**7.** Procédé de préparation selon la revendication 6, dans lequel la calcination à l'étape (C) et/ou à l'étape (e1)(iii) et/ou à l'étape (e2)(jjj) et/ou à l'étape (e3)(k) est effectuée pendant une durée de 1 à 24 heures, et de préférence la calcination à l'étape (C) est effectuée pendant une durée de 3 à 6 heures ou pendant une durée de 5 à 15 heures, la calcination à l'étape (e1)(iii) et/ou à l'étape (e3)(k) est effectuée pendant une durée de 3 à 6 heures, et la calcination à l'étape (e2)(jjj) est effectuée pendant une durée de 5 à 15 heures.

**8.** Procédé de préparation selon la revendication 6 ou 7, dans lequel la calcination à l'étape (C) et/ou à l'étape (e1)(iii) et/ou à l'étape (e2)(jjj) et/ou à l'étape (e3)(k) est effectuée selon une rampe de montée en température comprise entre 1°C/min et 50°C/min, et de préférence entre 5°C/min et 20°C/min, pour atteindre la température de calcination donnée.

**9.** Procédé de préparation selon l'une des revendications 6 à 8, dans lequel la calcination à l'étape (C) est effectuée sous air à une température comprise entre 800°C et 950°C, et plus préférentiellement entre 900°C et 950°C, la calcination à l'étape (e1)(iii) et/ou à l'étape (e3)(k) est effectuée sous air à une température comprise entre 750°C et 950°C, et la calcination à l'étape (e2)(jjj) est effectuée sous air à une température comprise entre 900°C et 950°C.

**10.** Procédé de préparation selon l'une des revendications 6 à 9, dans lequel l'imprégnation à l'étape (e1)(i) et/ou à l'étape (e3)(k) est réalisée à sec avec une solution aqueuse comportant du nitrate de magnésium.

**11.** Procédé de préparation selon l'une des revendications 6 à 10, dans lequel l'imprégnation à l'étape (e2)(j) est réalisée avec une solution aqueuse comportant du nitrate de cuivre.

**12.** Procédé selon l'une des revendications 6 à 11, dans lequel à l'étape (e3)(kk) on ajoute à la suspension issue de l'étape (A) du nitrate de magnésium en tant que précurseur soluble de Mg, et éventuellement du nitrate de cuivre en tant que précurseur soluble de Cu.

**13.** Procédé de préparation selon l'une des revendications 6 à 12, dans lequel l'imprégnation dans au moins une des étapes (e1)(i) ou (e2)(j) est réalisée en plusieurs étapes successives, et une calcination intermédiaire entre deux étapes d'imprégnation successives est de préférence réalisé, à une température comprise entre 400°C et 600°C.

**14.** Procédé de préparation selon l'une des revendications 6 à 13, dans lequel les quantités de précurseurs de magnésium et de cuivre sont calculées afin que Y soit comprise entre 1% et 23% et X soit comprise entre 5% et 39%, avec Y < -0,6342X + 26,223, de manière à former le premier spinelle sous-stoechiométrique et/ou le deuxième spinelle sous-stoechiométrique.

**15.** Procédé de préparation selon l'une des revendications 6 à 14, dans lequel l'intégration de Cu et de Mg est effectuée selon l'étape (e3), et de préférence selon la sous-étape (kk) ou (kkk), et dans lequel la calcination à l'étape (C) est effectuée sous air à une température comprise entre 800°C et 950°C, et plus préférentiellement entre 900°C et 950°C, et pendant une durée de 1 à 24 heures, de préférence de 5 heures à 15 heures.

**16.** Procédé de combustion d'une charge hydrocarbonée par oxydo-réduction en boucle chimique utilisant un solide porteur d'oxygène selon l'une des revendications 1 à 5, ou préparé selon le procédé selon l'une des revendications 6 à 15.

**17.** Procédé de combustion d'une charge hydrocarbonée par oxydo-réduction en boucle chimique selon la revendication 16, dans lequel le solide porteur d'oxygène circule entre au moins une zone de réduction et une zone d'oxydation opérant toutes les deux en lit fluidisé, la température dans la zone de réduction et dans la zone d'oxydation étant comprise entre 600°C et 1200°C, et de préférence comprise entre 600°C et 1100°C, et plus préférentiellement entre 800°C et 1100°C.

**Patentansprüche**

**1.** Sauerstoffträger-Feststoff in Form von Partikeln für ein Chemical-Looping-Redoxverfahren wie die Chemical-Looping-Verbrennung, umfassend:

- Kupfer mit einem Gesamtgehalt X zwischen 5 % und 39 %, ausgedrückt als Kupferoxidgewicht bezogen auf das Gesamtgewicht des Sauerstoffträger-Feststoffs in seiner oxidierten Form;
- eine Matrix aus Keramik, in der das Kupfer dispergiert ist, wobei die Matrix aus Keramik umfasst:

-- einen ersten substöchiometrischen Spinell mit der Formel $Mg_aAl_bO_4$, und/oder
-- einen zweiten substöchiometrischen Spinell mit der Formel $Cu_cMg_dAl_eO_4$,

mit:

$$a = \frac{4}{\left(1 + \left(3 \times \left(\frac{(100-X)}{Y} - 1\right) \times \frac{M_{MgO}}{M_{Al2O3}}\right)\right)}$$

$$b = \frac{8 \times (100 - X - Y)}{\left(Y \times \frac{M_{Al2O3}}{M_{MgO}} + 3 \times (100 - X - Y)\right)}$$

$$c = \frac{4X}{M_{CuO} \times \left(\frac{X}{M_{CuO}} + \frac{Y}{M_{MgO}} + 3 \times \frac{100 - X - Y}{M_{Al2O3}}\right)}$$

$$d = \frac{4Y}{M_{MgO} * \left(\frac{X}{M_{CuO}} + \frac{Y}{M_{MgO}} + 3 \times \frac{100 - X - Y}{M_{Al2O3}}\right)}$$

$$e = \frac{8 \times (100 - X - Y)}{M_{Al2O3} \times \left(\frac{X}{M_{CuO}} + \frac{Y}{M_{MgO}} + 3 \times \frac{100 - X - Y}{M_{Al2O3}}\right)}$$

wobei $M_{MgO}$, $M_{CuO}$, $M_{Al2O3}$ die jeweiligen molaren Massen von MgO, CuO und $Al_2O_3$ sind,

wobei Y die Menge von MgO als gewichtsprozentualer Anteil des Sauerstoffträger-Feststoffs ist,
wobei X zwischen 5 % und 39 % beträgt, Y zwischen 1 % und 23 % beträgt und Y < - 0,6342X + 26,223.

2. Feststoff nach Anspruch 1, wobei die Matrix den ersten Spinell oder den zweiten Spinell umfasst.

3. Feststoff nach einem der vorhergehenden Ansprüche, wobei die Matrix im Wesentlichen aus dem zweiten Spinell besteht.

4. Feststoff nach einem der vorhergehenden Ansprüche, wobei die Partikel eine im Wesentlichen kugelige Form haben und eine derartige Korngröße, dass mehr als 90 % der Partikel eine Größe zwischen 50 μm und 600 μm, bevorzugt zwischen 80 μm und 400 μm und noch stärker bevorzugt zwischen 100 μm und 300 μm aufweisen.

5. Feststoff nach einem der vorhergehenden Ansprüche, umfassend ferner:

   - ein Gesamtporenvolumen des Sauerstoffträger-Feststoffs Vtot, gemessen durch Quecksilberporosimetrie, zwischen 0,05 und 1,2 ml/g;
   - ein Porenvolumen der Makroporen, das mindestens 10 % von Vtot ausmacht;
   - eine Größenverteilung der Makroporen in dem Sauerstoffträger-Feststoff, gemessen durch Quecksilberporosimetrie, größer als 50 nm und kleiner als oder gleich 7 μm.

6. Verfahren zur Zubereitung eines Sauerstoffträger-Feststoffs nach einem der Ansprüche 1 bis 5, umfassend die folgenden Schritte:

   (A) das Zubereiten einer wässrigen Suspension, die Aluminiumoxidpartikel und ein Aluminiumoxid-Bindemittel umfasst, wobei das Aluminiumoxid-Bindemittel bevorzugt Böhmit und/oder Aluminiumhydroxide ist, wobei die Aluminiumoxidpartikel Körner mit einer Größe zwischen 0,1 μm und 20 μm bilden;
   (B) das Zerstäubungstrocknen der im Schritt (A) erhaltenen Suspension, um Partikel zu bilden, wobei das Zerstäubungstrocknen das Sprühen der Suspension in eine Trocknungskammer mithilfe von Sprühmitteln, um Tröpfchen zu bilden, und das gleichzeitige Kontaktieren der Tröpfchen mit einem heißen Trägergas, bevorzugt Luft oder Stickstoff, das auf eine Temperatur zwischen 180 °C und 350 °C gebracht wird, umfasst;
   (C) das Kalzinieren der aus dem Zerstäubungstrocknen im Schritt (B) hervorgegangenen Partikel, wobei das Kalzinieren unter Luft und bei einer Temperatur zwischen 400 °C und 1400 °C durchgeführt wird;
   (D) das optionale Sieben der aus dem Schritt (C) hervorgegangenen kalzinierten Partikel, bevorzugt durch Trennen mittels eines Zyklons;
   (E) das Einbinden von Cu und von Mg gemäß der Verkettung der Schritte (e1) und (e2) oder gemäß dem Schritt (e3) oder gemäß den Schritten (e3) und (e2), um den Sauerstoffträger-Feststoff in Form von Partikeln zu erzeugen:

      (e1) (i) das Imprägnieren der aus dem Schritt (C) hervorgegangenen kalzinierten oder aus dem Schritt (D) hervorgegangenen optional gesiebten Partikel mit einer wässrigen oder organischen Lösung, die mindestens eine lösliche Vorläuferverbindung von Mg enthält, dann (ii) das Trocknen der aus (i) hervorgegangenen imprägnierten Partikel bei einer Temperatur zwischen 30°C und 200°C, gefolgt (iii) von einem Kalzinieren bei einer Temperatur zwischen 700°C und 1400 °C, bevorzugt unter Luft;
      (e2) (i) das Imprägnieren der aus dem Schritt (e1) hervorgegangenen kalzinierten Partikel oder der aus dem Schritt (C) hervorgegangen kalzinierten Partikel oder optional der aus dem Schritt (D) hervorgegangenen gesiebten Partikel mit einer wässrigen oder organischen Lösung, die mindestens eine lösliche Vorläuferverbindung von Cu enthält, dann (jj) das Trocknen der aus (j) hervorgegangenen imprägnierten Partikel bei einer Temperatur zwischen 30°C und 200°C, gefolgt (jjj) von einem Kalzinieren bei einer Temperatur zwischen 700°C und 1400 °C, bevorzugt unter Luft;
      (e3) das Einarbeiten eines Vorläufers von Mg und gegebenenfalls eines Vorläufers von Cu vor dem Schritt (B) gemäß einem der folgenden Teilschritte (k), (kk) oder (kkk):

         (k) vor dem Schritt (A) das Imprägnieren der Aluminiumoxidpartikel, die zum Zubereiten der Suspension im Schritt (A) verwendet werden, mit einer wässrigen oder organischen Lösung, die mindestens eine Vorläuferverbindung von Mg und gegebenenfalls eine Vorläuferverbindung von Cu enthält, optional gefolgt von dem Trocknen der imprägnierten Aluminiumoxidpartikel bei einer Temperatur zwischen 30°C und 200°C und einem Kalzinieren bei einer Temperatur zwischen 700 °C und 1400 °C, bevorzugt unter Luft, der getrockneten Aluminiumoxidpartikel;

(kk) nach dem Schritt (A) und vor dem Schritt (B) das Zugeben mindestens eines löslichen Vorläufers von Mg und gegebenenfalls eines löslichen Vorläufers von Cu zu der aus dem Schritt (A) hervorgegangenen Suspension;

(kkk) nach dem Schritt (A) und vor dem Schritt (B) das Zugeben mindestens eines Oxids von Mg und gegebenenfalls eines Oxids von Cu zu der aus dem Schritt (A) hervorgegangenen Suspension, wobei das oder die Oxide in Form von Körnern mit einer Größe zwischen 0,1 µm und 20 µm vorliegen;

mit der Maßgabe, dass der Schritt (e2) unbedingt in Kombination mit dem Schritt (e3) ausgeführt wird, wenn keine Vorläuferverbindung von Cu oder lösliche Vorläuferverbindung von Cu oder kein Oxid von Cu bei den Teilschritten (k), (kk) und (kkk) im Schritt (e3) zugegeben wird.

7. Verfahren zur Zubereitung nach Anspruch 6, wobei das Kalzinieren im Schritt (C) und/oder im Schritt (e1)(iii) und/oder im Schritt (e2)(jjj) und/oder im Schritt (e3)(k) während einer Dauer von 1 bis 24 Stunden durchgeführt wird und bevorzugt das Kalzinieren im Schritt (C) während einer Dauer von 3 bis 6 Stunden oder während einer Dauer von 5 bis 15 Stunden durchgeführt wird, das Kalzinieren im Schritt (e1)(iii) und/oder im Schritt (e3)(k) während einer Dauer von 3 bis 6 Stunden durchgeführt wird und das Kalzinieren im Schritt (e2)(jjj) während einer Dauer von 5 bis 15 Stunden durchgeführt wird.

8. Verfahren zur Zubereitung nach Anspruch 6 oder 7, wobei das Kalzinieren im Schritt (C) und/oder im Schritt (e1)(iii) und/oder im Schritt (e2)(jjj) und/oder im Schritt (e3)(k) gemäß einer Temperaturanstiegsrampe zwischen 1 °C/min und 50 °C/min und bevorzugt zwischen 5 °C/min und 20 °C/min, um die gegebene Kalzinierungstemperatur zu erreichen, durchgeführt wird.

9. Verfahren zur Zubereitung nach einem der Ansprüche 6 bis 8, wobei das Kalzinieren im Schritt (C) unter Luft bei einer Temperatur zwischen 800 °C und 950 °C und stärker bevorzugt zwischen 900 °C und 950 °C durchgeführt wird, das Kalzinieren im Schritt (e1)(iii) und/oder im Schritt (e3)(k) unter Luft bei einer Temperatur zwischen 750 °C und 950 °C durchgeführt wird und das Kalzinieren im Schritt (e2)(jjj) unter Luft bei einer Temperatur zwischen 900 °C und 950 °C durchgeführt wird.

10. Verfahren zur Zubereitung nach einem der Ansprüche 6 bis 9, wobei das Imprägnieren im Schritt (e1)(i) und/oder im Schritt (e3)(k) im Trockenen mit einer wässrigen Lösung ausgeführt wird, die Magnesiumnitrat umfasst.

11. Verfahren zur Zubereitung nach einem der Ansprüche 6 bis 10, wobei das Imprägnieren im Schritt (e2)(j) mit einer wässrigen Lösung ausgeführt wird, die Kupfernitrat umfasst.

12. Verfahren nach einem der Ansprüche 6 bis 11, wobei im Schritt (e3)(kk) zu der aus dem Schritt (A) hervorgegangenen Suspension Magnesiumnitrat als löslicher Vorläufer von Mg und gegebenenfalls Kupfernitrat als löslicher Vorläufer von Cu zugegeben wird.

13. Verfahren zur Zubereitung nach einem der Ansprüche 6 bis 12, wobei das Imprägnieren in mindestens einem der Schritte (e1)(i) oder (e2)(j) in mehreren aufeinander folgenden Schritten ausgeführt wird und bevorzugt eine Zwischenkalzinierung zwischen zwei aufeinanderfolgenden Imprägnierschritten ausgeführt wird, bei einer Temperatur zwischen 400 °C und 600 °C.

14. Verfahren zur Zubereitung nach einem der Ansprüche 6 bis 13, wobei die Magnesium- und Kupfervorläufermengen berechnet werden, damit Y zwischen 1 % und 23 % beträgt und X zwischen 5 % und 39 % beträgt, mit $Y < -0,6342X + 26,223$, so dass der erste substöchiometrische Spinell und/oder der zweite substöchiometrische Spinell gebildet wird.

15. Verfahren zur Zubereitung nach einem der Ansprüche 6 bis 14, wobei das Einbinden von Cu und von Mg gemäß dem Schritt (e3) und bevorzugt gemäß dem Teilschritt (kk) oder (kkk) durchgeführt wird und wobei das Kalzinieren im Schritt (C) unter Luft bei einer Temperatur zwischen 800 °C und 950 °C und stärker bevorzugt zwischen 900°C und 950 °C und während einer Dauer von 1 bis 24 Stunden, bevorzugt von 5 Stunden bis 15 Stunden, durchgeführt wird.

16. Verfahren zur Verbrennung eines kohlenwasserstoffhaltigen Einsatzmaterials durch eine Chemical-Looping-Redoxreaktion unter Verwendung eines Sauerstoffträger-Feststoffs nach einem der Ansprüche 1 bis 5 oder eines nach dem Verfahren nach einem der Ansprüche 6 bis 15 zubereiteten Sauerstoffträger-Feststoffs.

**17.** Verfahren zur Verbrennung eines kohlenwasserstoffhaltigen Einsatzmaterials durch eine Chemical-Looping-Redoxreaktion nach Anspruch 16, wobei der Sauerstoffträger-Feststoff zwischen mindestens einem Reduktionsbereich und einem Oxidationsbereich zirkuliert, die beide in der Wirbelschicht arbeiten, wobei die Temperatur in dem Reduktionsbereich und in dem Oxidationsbereich zwischen 600°C und 1200°C und bevorzugt zwischen 600 °C und 1100 °C und stärker bevorzugt zwischen 800 °C und 1100 °C beträgt.

**Claims**

**1.** Oxygen carrier solid in particulate form for a chemical looping redox process such as chemical looping combustion, including:

- copper in a total content X of between 5% and 39% expressed as copper oxide by weight relative to the total weight of the oxygen carrier solid in its oxidized form;
- a ceramic matrix within which said copper is dispersed, said ceramic matrix including:

-- a first sub-stoichiometric spinel of formula $Mg_aAl_bO_4$, and/or
-- a second sub-stoichiometric spinel of formula $Cu_cMg_dAl_eO_4$,

with:

$$a = \frac{4}{\left(1 + \left(3 \times \left(\frac{(100 - X)}{Y} - 1\right) \times \frac{M_{MgO}}{M_{Al2O3}}\right)\right)}$$

$$b = \frac{8 \times (100 - X - Y)}{\left(Y \times \frac{M_{Al2O3}}{M_{MgO}} + 3 \times (100 - X - Y)\right)}$$

$$c = \frac{4X}{M_{CuO} \times \left(\frac{X}{M_{CuO}} + \frac{Y}{M_{MgO}} + 3 \times \frac{100 - X - Y}{M_{Al2O3}}\right)}$$

$$d = \frac{4Y}{M_{MgO} * \left(\frac{X}{M_{CuO}} + \frac{Y}{M_{MgO}} + 3 \times \frac{100 - X - Y}{M_{Al2O3}}\right)}$$

$$e = \frac{8 \times (100 - X - Y)}{M_{Al2O3} \times \left(\frac{X}{M_{CuO}} + \frac{Y}{M_{MgO}} + 3 \times \frac{100 - X - Y}{M_{Al2O3}}\right)}$$

$M_{MgO}$, $M_{CuO}$ and $M_{Al2O3}$ being the molar masses of MgO, CuO and $Al_2O_3$, respectively,
Y being the amount of MgO as a weight percentage of the oxygen carrier solid,
with X being between 5% and 39%, Y being between 1% and 23%, and Y < -0.6342X + 26.223.

**2.** Solid according to Claim 1, in which the matrix comprises the first spinel or the second spinel.

**3.** Solid according to either of the preceding claims, in which the matrix consists substantially of the second spinel.

4. Solid according to one of the preceding claims, in which the particles have a substantially spherical shape, and a particle size such that more than 90% of the particles have a size of between 50 $\mu$m and 600 $\mu$m, preferably between 80 $\mu$m and 400 $\mu$m, and more preferentially between 100 $\mu$m and 300 $\mu$m.

5. Solid according to one of the preceding claims, also including:

- a total pore volume of the oxygen carrier solid Vtot, measured by mercury porosimetry, of between 0.05 and 1.2 ml/g;
- a pore volume of the macropores constituting at least 10% of Vtot;
- a size distribution of macropores within the oxygen carrier solid, measured by mercury porosimetry, of greater than 50 nm and less than or equal to 7 $\mu$m.

6. Process for preparing an oxygen carrier solid according to one of Claims 1 to 5, comprising the following steps:

(A) preparing an aqueous suspension including alumina particles and an aluminic binder, said aluminic binder preferably being boehmite and/or aluminium hydroxides, said alumina particles forming grains with a size of between 0.1 $\mu$m and 20 $\mu$m;
(B) spray drying the suspension obtained in step (A) to form particles, said spray drying involving spraying the suspension into a drying chamber with spraying means to form droplets, and simultaneously placing said droplets in contact with a hot carrier gas, preferably air or nitrogen, heated to a temperature of between 180°C and 350°C;
(C) calcining the particles resulting from the spray drying in step (B), said calcining being performed in air and at a temperature of between 400°C and 1400°C;
(D) optional screening of the calcined particles obtained from step (C), preferably by separation using a cyclone;
(E) integrating Cu and Mg according to the sequence of steps (e1) and (e2), or according to step (e3), or according to steps (e3) and (e2) to produce the oxygen carrier solid in the form of particles:

(e1) (i) impregnating the calcined particles obtained from step (C) or optionally screened particles obtained from step (D) with an aqueous or organic solution containing at least one soluble Mg precursor compound, and then (ii) drying said impregnated particles obtained from (i) at a temperature of between 30°C and 200°C, followed by (iii) calcination at a temperature of between 700°C and 1400°C, preferably in air;
(e2) (j) impregnating the calcined particles obtained from step (e1) or the calcined particles obtained from step (C) or optionally the screened particles obtained from step (D), with an aqueous or organic solution containing at least one soluble Cu precursor compound and then (jj) drying said impregnated particles obtained from (j) at a temperature of between 30°C and 200°C followed by (jjj) calcination at a temperature of between 700°C and 1400°C, preferably in air;
(e3) incorporating an Mg precursor and optionally a Cu precursor before step (B) according to one of the following sub-steps (k), (kk) or (kkk):

(k) before step (A), impregnating the alumina particles used for preparing the suspension in step (A) with an aqueous or organic solution containing at least one Mg precursor compound, and optionally a Cu precursor compound, optionally followed by drying the impregnated alumina particles at a temperature of between 30°C and 200°C and calcining the dried alumina particles at a temperature of between 700°C and 1400°C, preferably in air;
(kk) after step (A) and before step (B), adding at least one soluble Mg precursor, and optionally a soluble Cu precursor, to the suspension obtained from step (A);
(kkk) after step (A) and before step (B), adding to the suspension obtained from step (A) at least one Mg oxide, and optionally a Cu oxide, said oxide(s) being in the form of grains with a size of between 0.1 $\mu$m and 20 $\mu$m;
it being understood that step (e2) is necessarily performed in combination with step (e3) if no Cu precursor compound or soluble Cu precursor compound or Cu oxide is added during sub-steps (k), (kk) and (kkk) in step (e3).

7. Preparation process according to Claim 6, in which the calcination in step (C) and/or in step (e1)(iii) and/or in step (e2)(jjj) and/or in step (e3)(k) is performed for a period of 1 to 24 hours, and preferably the calcination in step (C) is performed for a period of 3 to 6 hours or for a period of 5 to 15 hours, the calcination in step (e1)(iii) and/or in step (e3)(k) is performed for a period of 3 to 6 hours, and the calcination in step (e2)(jjj) is performed for a period of 5 to 15 hours.

8. Preparation process according to Claim 6 or 7, in which the calcination in step (C) and/or in step (e1)(iii) and/or in step (e2)(jjj) and/or in step (e3)(k) is performed according to a temperature increase ramp of between 1°C/min and 50°C/min, and preferably between 5°C/min and 20°C/min, to reach the given calcination temperature.

9. Preparation process according to one of Claims 6 to 8, in which the calcination in step (C) is performed in air at a temperature of between 800°C and 950°C, and more preferentially between 900°C and 950°C, the calcination in step (e1)(iii) and/or in step (e3)(k) is performed in air at a temperature of between 750°C and 950°C, and the calcination in step (e2)(jjj) is performed in air at a temperature of between 900°C and 950°C.

10. Preparation process according to one of Claims 6 to 9, in which the impregnation in step (e1)(i) and/or in step (e3)(k) is performed dry with an aqueous solution including magnesium nitrate.

11. Preparation process according to one of Claims 6 to 10, in which the impregnation in step (e2)(j) is performed with an aqueous solution including copper nitrate.

12. Process according to one of Claims 6 to 11, in which, in step (e3)(kk), magnesium nitrate is added to the suspension obtained from step (A) as a soluble Mg precursor, and optionally copper nitrate is added as a soluble Cu precursor.

13. Preparation process according to one of Claims 6 to 12, in which the impregnation in at least one of the steps (e1)(i) or (e2)(j) is performed in several successive steps, and an intermediate calcination between two successive impregnation steps is preferably performed, at a temperature of between 400°C and 600°C.

14. Preparation process according to one of Claims 6 to 13, in which the amounts of magnesium and copper precursors are calculated so that Y is between 1% and 23% and X is between 5% and 39%, with $Y < -0.6342X + 26.223$, so as to form the first sub-stoichiometric spinel and/or the second sub-stoichiometric spinel.

15. Preparation process according to one of Claims 6 to 14, in which the integration of Cu and Mg is performed according to step (e3), and preferably according to sub-step (kk) or (kkk), and in which the calcination in step (C) is performed in air at a temperature of between 800°C and 950°C, and more preferentially between 900°C and 950°C, and for a time of from 1 to 24 hours, preferably from 5 hours to 15 hours.

16. Process for chemical looping redox combustion of a hydrocarbon feedstock using an oxygen carrier solid according to one of Claims 1 to 5, or prepared according to the process according to one of Claims 6 to 15.

17. Process for chemical looping redox combustion of a hydrocarbon feedstock according to Claim 16, in which the oxygen carrier solid circulates between at least one reduction zone and one oxidation zone both operating in a fluidized bed, the temperature in the reduction zone and in the oxidation zone being between 600°C and 1200°C, and preferably between 600°C and 1100°C, and more preferentially between 800°C and 1100°C.

Fig 1

Fig 2A

Fig 2B

Fig 2C

Fig 2D

Fig 2E

Fig 3A

Fig 3B

Fig 3C

Fig 3D

Fig 4A

Fig 4B

Fig 4C

Fig 4D

Fig 5A

Fig 5B

Fig 5C

Fig 6A

Fig 6B

Fig 6C

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 5447024 A
- WO 2006123925 A
- WO 2012155059 A
- FR 2937030
- FR 3061036
- FR 2934263

### Littérature non-brevet citée dans la description

- **CLC. GAYÁN PILAR et al.** *ENERGY & FUELS,* 17 Mars 2011, vol. 25 (3), 1316-1326
- **ADANEZ et al.** Progress in Chemical Looping Combustion and Reforming technologies. *Progress in Energy and Combustion Science,* 2012, vol. 38 (2), 215-282
- **P. KNUTSSON ; C. LINDERHOLM.** Characterization of Ilmenite used as Oxygen Carrier in a 100 kW Chemical-Looping Combustor for Solid fuels. *Applied Energy,* 2015, vol. 157, 368-373
- **ABANADES et al.** Emerging CO2 Capture systems. *Int. J. Greenhouse Gas Control,* 2015, vol. 40, 126-166
- **WEI et al.** Continuous Operation of a 10 kWth Chemical Looping Integrated Fluidized Bed Reactor for Gasifying Biomass Using an Iron-Based Oxygen Carrier. *Energy Fuels,* 2015, vol. 29, 233-241
- **FORERO.** High température behaviour of a CuO/γ-Al2O3 oxygen Carrier for chemical-looping combustion. *Int. J. Greenhouse Gas Control,* 2011, vol. 5, 659-667
- **LAMBERT et al.** Performance and dégradation mechanisms of CLC particles produced by industrial methods. *Fuel,* 2018, vol. 216, 71
- **ADANEZ-RUBIO et al.** Investigations of combined supports for Cu-based oxygen Carriers for chemical-looping with oxygen uncoupling. *Energy Fuels,* 2013, vol. 27, 3918
- **L.S. FAN et al.** Ionic diffusion in the oxidation of iron - effect of support and its implications to chemical looping applications. *Energy Environ. Sci.,* 2011, vol. 4, 876
- **JERNDAL et al.** Investigation of NiO/NiAl2O4 oxygen Carriers for chemiCal-looping combustion produced by spray-drying. *International Journal of Greenhouse Gas Control,* 2010, vol. 4, 23
- **LINDERHOLM et al.** Long-term integrity testing of spray-dried particles in a 10-kW chemical-looping combustor using natural gas as fuel. *Fuel,* 2009, vol. 88 (11), 2083-2096
- **SMIT ; WIJN.** Les Ferrites. Techn. Philipps, 1961
- Ceramic Microstructures. **A. P. TOMSIA ; A. M. GLAESER.** Control at the Atomic Level. Springer, 1998
- **JEAN CHARPIN ; BERNARD RASNEUR.** *Techniques de l'ingénieur, traité analyse et caractérisation,* 1050-1055
- **F. ROUQUÉROL ; J. ROUQUÉROL ; K. SING.** Adsorption by powders and porous solids. Principles, methodology and applications. Academic Press, 1999
- **D. GELDART.** Types of gas fluidization. *Powder Technol.,* 1973, vol. 7 (5), 285-292
- *The Journal of American Society,* 1938, vol. 60, 309
- **H. STAINTON et al.** *Fuel,* 2012, vol. 101, 205-214